# EUROPEAN PATENT APPLICATION

(11) **EP 1 819 187 A1**
(43) Date of publication of application: **15.08.2007**
(21) Application number: 07002845.1
(22) Date of filing: 09.02.2007
(51) Int. Cl.: H04Q 7/38

(54) **Method and apparatus for supporting handover in a DVB-H CBMS system**

(30) Priority: 09.02.2006 KR 20060012762; 15.02.2006 KR 20060014862; 22.02.2006 KR 20060017191; 25.09.2006 KR 20060092847
(71) Applicant: Samsung Electronics Co., Ltd., Yeongtong-gu Suwon-si, Gyeonggi-do (KR)
(72) Inventor: Xu, Yiling, Suwon-si, Gyeonggi-do (KR); Ann, Jong-Hoon, Suwon-si, Gyeonggi-do (KR); Song, Jae-Yeon, Suwon-si, Gyeonggi-do (KR); Lee, Kook-Heui, Suwon-si, Gyeonggi-do (KR)
(74) Representative: Grünecker, Kinkeldey, Stockmair & Schwanhäusser Anwaltssozietät

(57) **Abstract**

An apparatus and method for enabling a terminal to continuously receive an on-going service even when the terminal moves out of a serving cell or a home network in a DVB-H CBMS system are provided, in which a network controls a handover, designates a target cell for the terminal if the terminal is to perform the handover on an interactive channel, and when needed, processes the handover over an interactive network.

## Description

### BACKGROUND OF THE INVENTION

### 1. Field of the Invention

The present invention generally relates to a Digital Video Broadcasting-Handheld (DVB-H) Convergence of Broadcast and Mobile Services (CBMS) system. More particularly, the present invention relates to a method and apparatus for providing HandOver (HO) information to a terminal that will perform the handover.

### 2. Description of the Related Art

DVB-H CBMS is a service that provides convenient functionalities through the convergence of digital TV broadcasting services that are excellent in mobile reception performance and mobile communications. As TV technology has recently evolved from analog to digital, viewers can enjoy TV services with High Definition Television (HDTV)-level, high-image quality and high-voice Compact Disk (CD)-level quality at home. The diversification of modem society has brought a great change to activities and life styles of viewers. Consequently, portable devices including portable phones, Personal Digital Assistants (PDAs), and laptop computers have been widespread. Hence, demands for clear, vivid, and lifelike images on TV even during roaming are increasing. Efforts have been expended toward overcoming the limitations of a broadcast network without uplink channels by converging broadcasting with mobile communications. DVB-H CBMS was the result of these efforts.

DVB-H CBMS is a system designed for terminals that are capable of using mobile communication channels. As with cell-based wireless communications , DVB-H CBMS covers the concept of handover as in a legacy mobile communication system.

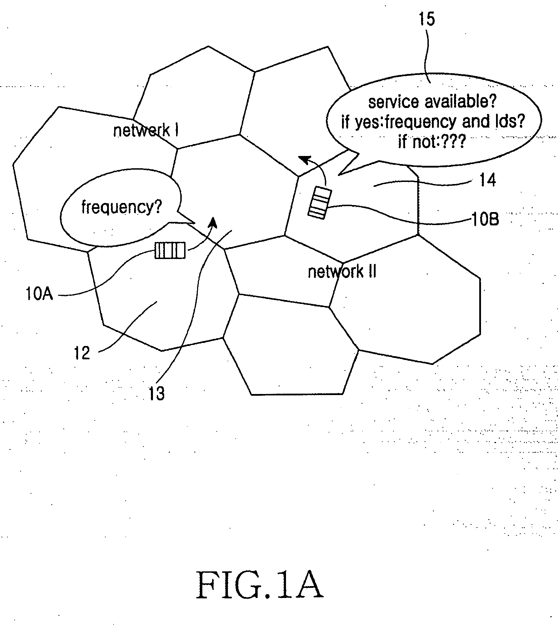

FIG. 1A illustrates the concept of handover in a typical DVB-H system.

Referring to FIG. 1A, when a terminal 10A moves from one cell 12 to another cell 13 during viewing a selected service from cell 12, it needs to receive from cell 13 the same transport stream as received from cell 12 in order to enjoy the on-going service. If the transport streams from the two cells 12 and 13 are different, the transport stream from target cell 13 should include at least the same service. In view of different transmission frequencies in different cells, terminal 10A should be aware of the frequencies of neighboring cells, for handover. The frequency information of the neighboring cells can be acquired from Program-Specific Information/Service Information (PSI/SI) provided by a DVB network. A handover procedure in this case is beyond the scope of the present invention and thus, will not be detailed herein. For details, see European Telecommunications Standards Institute (ETSI) Technical Report (TR) 101 211, "Digital Video Broadcasting (DVB); Guidelines on implementation and usage of Service Information (SI)".

If a terminal 10B moves out of a home network 30 to a foreign network 40, it should know the Identity (ID) of transport streams of an on-going service from the foreign network in addition to frequency information. The ID is also known from the PSI/SI. For details, see ETSI TR 101 211, "Digital Video Broadcasting (DVB); Guidelines on implementation and usage of Service Information (SI)"

If the on-going service is not available in the foreign network, terminal 10B searches for a substitute service. The substitute service is a service that is organized in a different fashion but has the same contents, such as news. Further, a roaming procedure may be required to access the foreign network.
Handover targets seamless provisioning of on-going service during roaming. Despite the simplicity of handover, the conventional handover technique has a drawback that if the user fails to receive necessary HO information in the PSI/SI, the handover would fail and the on-going service interrupted.

In case of a network change event (e.g. link remapping to a particular service), the network changes PSI/SI that additionally provides system information to the terminal and updates an Electronic Service Guide (ESG) (if only a session is changed with no change in service organization, an acquisition fragment only is changed), to thereby notify the terminal of the network change and provides the terminal with HO information. However, considering the PSI/SI transmission is periodic, the handover may fail if the above operation is not performed at the proper time.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a handover method and apparatus for supporting a network-controlled handover, and designating a target cell by a network for a terminal that is to perform the handover using an interactive channel, and when needed, enabling the handover to an interactive network in a DVB-H CBMS system.

Moreover, an aspect of exemplary embodiments of the present invention provides a handover method and apparatus for providing HO information for a handover from the network to a terminal, when a change event has occurred in a network, providing a network control to the handover, and when needed, enabling the handover to an interactive network in a DVB-H CBMS system.

In accordance with an aspect of exemplary embodiments of the present invention, there is provided a method for supporting a handover for a terminal in a DVB-H CBMS system, in which a network receives a handover proposal message from the terminal, sends information about a candidate cell for the handover to the terminal, and sends information for service reception to the terminal over an interactive network and processes the handover from the broadcasting network to the interactive network, if the terminal moves out of the broadcasting network.

In accordance with another aspect of exemplary embodiments of the present invention, there is provided a method for performing a handover in a DVB-H CBMS system, in which a terminal sends a handover proposal message to a network, if the strength of the signal received from a serving cell is decreased, the terminal receives a response message for the handover proposal message from the network, performs the handover to a suitable candidate cell among candidate cells. If the response message includes information about the candidate cells, the terminal performs the handover to an interactive network, if the response message includes information indicating that a service requested by the terminal is provided over the interactive network.

In accordance with a further aspect of exemplary embodiments of the present invention, there is provided a method for supporting a handover for a terminal in a DVB-H CBMS system, in which a network detects a network environmental change, sends information about the change to the terminal, receives a handover proposal message including the received signal strength measurements of neighboring cells from the terminal, makes a handover solution based on the signal strength measurements and the network layout, and notifies the terminal of the handover solution.

In accordance with still another aspect of exemplary embodiments of the present invention, there is provided a method for performing a handover in a DVB-H CBMS system, in which a terminal receives information about a network environmental change from the network, sends a handover proposal message to the network including the received signal strengths of neighboring cells measured based on the network environmental change, receives a handover solution from the network, and performs the handover according to the handover solution.

In accordance with a further aspect of exemplary embodiments of the present invention, there is provided an apparatus for supporting a handover for a terminal in a DVB-H CBMS system, in which a service manager receives a handover proposal message from the terminal, sends information about a candidate cell for the handover to the terminal, and sends information for receiving a service to the terminal over an interactive network and processes the handover from the broadcasting network to the interactive network, if the terminal moves out of the broadcasting network.

In accordance with yet another aspect of exemplary embodiments of the present invention, there is provided an apparatus for performing a handover in a DVB-H CBMS system. A terminal apparatus sends a handover proposal message to a network, if the strength of the signal received from the serving cell is decreased; the terminal receives a response message for the handover proposal message from the network, performs the handover to a suitable candidate cell among candidate cells, if the response message includes information about the candidate cells. The terminal performs the handover to an interactive network, if the response message includes information indicating that a service requested by the terminal is provided over the interactive network.

In accordance with yet a further aspect of exemplary embodiments of the present invention, there is provided an apparatus for supporting a handover for a terminal in a DVB-H CBMS system, in which a service manager detects a network environmental change and sends information about the change to the terminal, receives a handover proposal message including the received signal strength measurements of neighboring cells from the terminal, makes a handover solution based on the signal strength measurements and the network layout, and notifies the terminal of the handover solution.

In accordance with still a further aspect of exemplary embodiments of the present invention, there is provided an apparatus for performing a handover in a DVB-H CBMS system. A terminal apparatus receives information about a network environmental change, sends a handover proposal message to the network including the received signal strengths of neighboring cells measured based on the network environmental change, receives a handover solution from the network, and performs the handover according to the handover solution.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1A illustrates the concept of handover in a typical DVB-H system
FIG. 1B shows the configuration of a typical CBMS system;
FIG. 2 is a signal flow diagram for a message exchange procedure for a handover according to the present invention;
FIG. 3 is a flowchart of an operation of a network according to the present invention;
FIG. 4 is a flowchart of an operation of a terminal according to the present invention;
FIG. 5 is a signal flow diagram for a message exchange procedure for a handover according to the present invention;
FIG. 6 is a flowchart of an operation of the network according to the present invention;
FIG. 7 is a flowchart of an operation of the terminal according to the present invention;
FIG. 8 is a signal flow diagram of the network and the terminal when a change event occurs to the network;
FIG. 9 is a signal flow diagram of a message exchange procedure for a handover according to the present invention;
FIG. 10 is a flowchart of an operation of the network according to the present invention;
FIG. 11 is a flowchart of an operation of the terminal according to the present invention;
FIG. 12 is a signal flow diagram for a message exchange procedure of a handover according to the present invention;
FIG. 13 is a flowchart of an operation of the network according to the present invention;
FIG. 14 is a flowchart of an operation of the terminal according to the present invention;
FIG. 15 illustrates a handover method according to the present invention;
FIGs. 16A and 16B are signal flow diagrams for a message exchange procedure for a handover according to the present invention;
FIGs. 17A and 17B are flowcharts of an operation of the network according to the present invention;
FIG. 18 is a flowchart of an operation of the terminal according to the present invention;
FIGs. 19A and 19B are signal flow diagrams for a message exchange procedure for a handover according to the present invention;
FIG. 20 is a flowchart of an operation of the network according to the present invention;
FIG. 21 is a flowchart of an operation of the terminal according to the present invention;
FIGs. 22A and 22B are signal flow diagrams for a message exchange procedure for a handover according to the present invention;
FIGs. 23A and 23B are flowcharts of an operation of the network according to the present invention; and
FIG. 24 is a flowchart of an operation of the terminal according to the present invention.

### DETAILED DESCRIPTION OF PFREFERRED EMBODIMENTS

The matters defined in the description such as detailed construction of preferred embodiments and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Throughout the drawings, the same reference numerals will be understood to refer to the same elements, features and structures.

Exemplary embodiments of the present invention do not limit acquisition of HO information to from PSI/SI in configuring a DVB-H CBMS system. The exemplary embodiments of the present invention provide a method and apparatus for providing essential, additional information and instructions to a handover terminal on the assumption that an interactive channel is available. Also, the exemplary embodiments of the present invention provide a network-controlled handover. The network-controlled handover is a handover scheme in which a network presents a necessary solution to the terminal in a handover situation. For implementation of the network-controlled handover, the terminal sends necessary information such as signal quality measurements to the network. When needed, the handover is performed to an interactive network.

A description will first be made of a DVB-H system to which the present invention applies. For better understanding of the present invention, entities are named as defined in the asynchronous mobile communication standard, 3^{rd} Generation Partnership Project (3GPP) or DVB-H and DVB-H CBMS. Yet, the present invention is not limited to the specific standards and names and thus it is to be clearly understood that the present invention is applicable to any other system with a similar technological background.

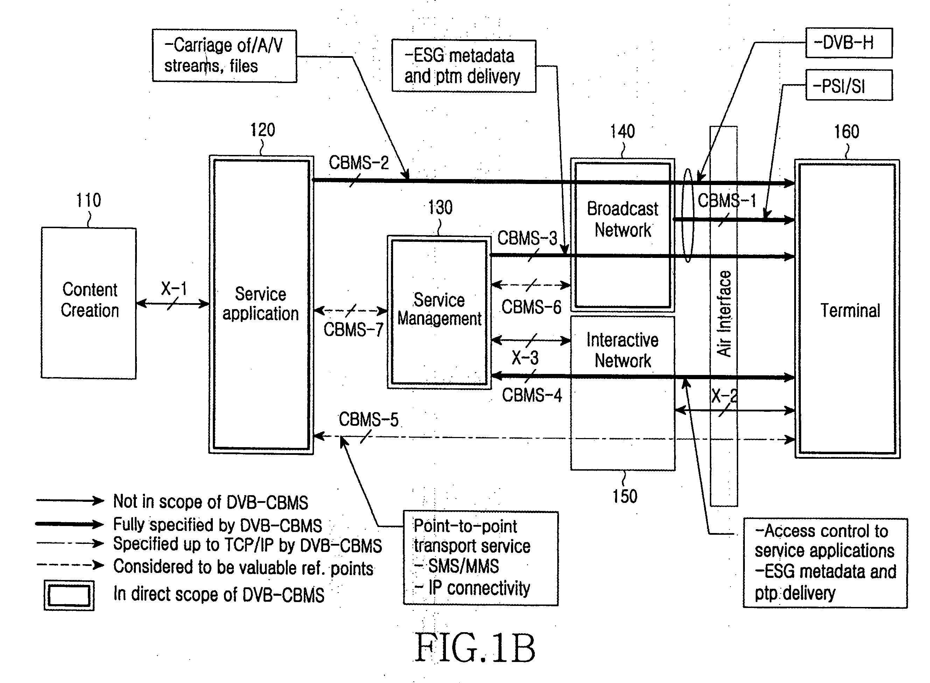

Referring to Fig. 1B, the illustrated entities are logical entities that can be physically separated or not. The logical entities may be incorporated into one or more physical entities. Only entities related to the subject matter of the present invention are shown in FIG. 1B.

The system configuration illustrated in FIG. 1B is compliant with one of portable broadcasting standards, DVB-CBMS. While the following description is made in the context of a DVB-CBMS notification broadcasting structure, it also holds true for other portable broadcasting systems with the notification message functionality.

Referring to FIG. 1B, a Content Creation (CC) 110 is the primary source of broadcasting services, such as conventional audio/video broadcasting services, file (music file or data file) download, etc. When a problem or a change occurs in provisioning of the broadcasting services, CC 110 notifies Service Application (SA) 120 of the problem or the change through a notification event generator.

SA 120 aggregates content from CC 110 and processes the content to a format suitable for a broadcast network (e.g. streaming audio/video or movie download), thus creating broadcasting service data. SA 120 also functions to generate standardized ESG metadata and accounting information for users. Upon notification of a change event associated with a broadcasting service from CC 110, SA 120 provides a notification event and then ESG attribute information for use in generating a notification message to a notification message generator of a Service Management (SM) 130.

SM 130 determines the transmission schedule of a broadcasting service provided from SA 120 and generates an ESG. SM 130 is connected to a broadcast network 140 over which broadcasting services are provided and an interactive network 150 that supports interactive communications.

SM 130 manages information about subscribers to receive broadcasting services, service provisioning information such as information indicating whether subscribers have purchased related contents, and device information about terminals that receive the broadcasting services. It sends the user accounting information to SA 120 and provides the subscriber information, the service provisioning information, and the device information to broadcast network 140 and interactive network 150.

Broadcast network 140 is a network that transfers the broadcasting services, for example, a DVB-H network herein.

Interactive network 150 provides point-to-point broadcasting services or bi-directionally exchanges control information and additional information associated with reception of the broadcasting services. For example, interactive network 150 is a legacy cellular network such as 3GPP Wideband Code Division Multiple Access (WCDMA).

A terminal 160 is broadcast-enabled and may access the cellular network depending on its performance. The present invention is described in the context of a broadcasting terminal capable of connecting to the cellular network.

Now a description will be made of interfaces between the functional entities in the DVB-H system. CBMS-x is encompasses IP datacast over DVB-H standard. Specifically, CBMS-7 interfaces between SA 120 and SM 130. CBMS-3 interfaces SM 130 with terminal 160 over the broadcast network. Via CBMS-3, SM 130 sends a message directly to terminal 160 on a broadcasting channel over broadcast network 140. CBMS-4 interfaces between SM 130 and terminal 160. Via CBMS-4, SM 130 sends a message directly to terminal 160 over interactive network 150 on a dedicated channel of terminal 160 or a broadcasting channel provided by interactive network 150. CBMS-6 interfaces SM 130 with broadcast network 140. Via CBMS-6, SM 130 establishes a transmission path over broadcast network 140 or a reception path for receiving event information from broadcast network 140. CBMS-1 interfaces broadcast network 140 with terminal 160, for broadcast network-specific signaling, PSI/SI signaling in DVB-H.

X-x is out of the scope of the IP datacast over DVB-H standard. Specifically, X-3 interfaces between SM 130 and interactive network 150. It is used to establish a transmission path between SM 130 and interactive network 150. X-2 is used to establish a transmission path between interactive network 150 and terminal 160. X-1 interfaces between CC 110 and SA 120, for establishing a transmission path between them.

The handover method of the present invention will be described with reference to the following exemplary embodiments.

### Embodiment 1

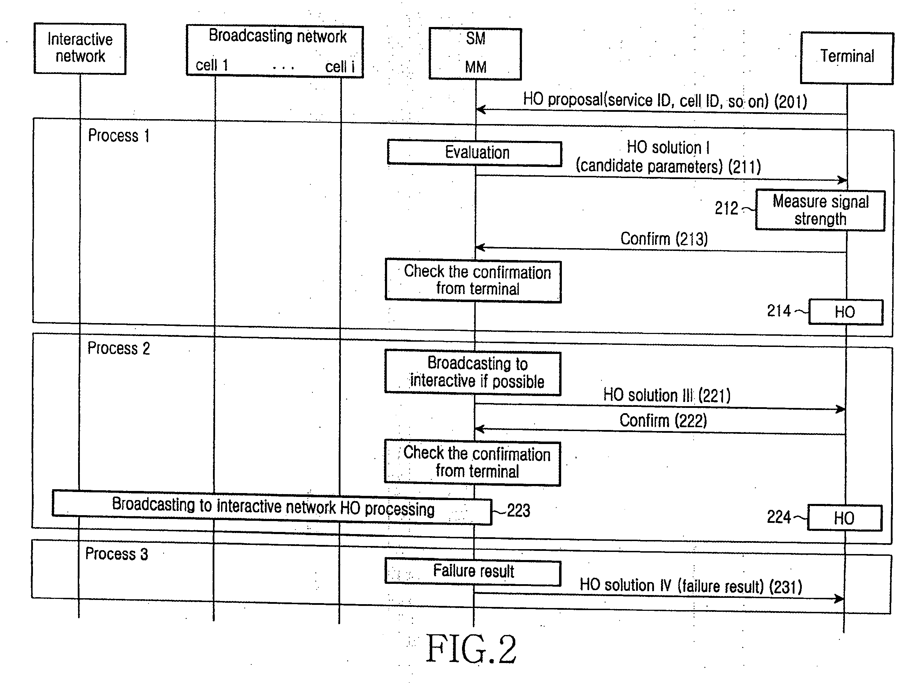

FIG. 2 is a signal flow diagram for a message exchange procedure for a handover according to an exemplary embodiment of the present invention.

Referring to Fig. 2, a network to which the present invention applies is comprised of an SM, a broadcast network, and an interactive network. The SM includes a Mobility Management (MM) and is responsible for managing user access to services during movement of the terminal. Hence, when the received signal strength of the terminal is so low as to require a handover, the terminal sends an HO proposal message to the MM in step 201. The HO proposal message has the following message format.

**Table 1**

| |
|---|
| HO proposal ID |
| User ID |
| Service ID |
| Provider ID |
| IP Address |
| IP Platform ID |
| Service_id |
| Transport stream_id |
| Original network_id |
| Cell_id |
| Network_id |
| HO Quality Requirement (optional) |
| Time for one Signal Quality Measurement (optional) |
| Signal Measurement Result (optional) |
| Signal Frequency |

Referring to Table 1, HO proposal ID identifies the HO proposal. User ID provides the ID of the user that requests the handover. Service ID provides a service ID in an ESG, and Provider ID identifies a provider that can be an ESG provider, a service provider, a network provider, or the like. IP address is the IP address of the service and IP platform ID provides the ID of the IP platform. Service_id is a service ID in PSI/SI, Transport stream_id is the ID of a transport stream, Original network_id identifies an original network, Cell_id identifies a serving cell to which the terminal currently belongs to, and Network_id identifies the network. HO quality requirement is an optional element that indicates to the network whether packet loss is acceptable or not during the handover. Time for one signal quality measurement is also optional. It indicates the time taken for the terminal to measure received signal strengths. Signal measurement result, which is optional, provides signal strength measurements for signal frequencies. Signal frequency indicates the measured signal frequencies.

The handover procedure is divided into Process 1, Process 2, and Process 3 according to HO solutions that the network presents.

In Process 1, the network communicates HO solution I to the terminal and the terminal performs the handover based on HO solution I. To be more specific, the network sends the HO solution I message with parameters associated with a candidate cell or candidate cells in step 211. The HO solution I message includes the following information.

**Table 2**

| |
|---|
| HO solution I ID |
| Candidate ID |
| Private data |
| Service_id |
| Transport stream_id |
| Original network_id |
| Cell_id |
| Network_id |
| Frequency |
| Coding |
| Modulation Mode |
| Key |
| Service ID |
| IP Address |
| IP platform_id |
| Available time |
| Charging (optional) |

In Table 2, HO solution I ID identifies HO solution I. Candidate ID is the ID of a candidate cell. If more than one candidate cell exist, Candidate ID distinguishes them. Private data is privately defined. It is used to describe whether a candidate service is identical to, a variation of, or associated with the current service. Service_id is a service ID in PSI/SI, Transport stream_id is the ID of a transport stream, Original network_id identifies the original network, Cell_id provides the ID of a cell, Network_id identifies the network, and Frequency is a frequency value. Coding indicates a coding type, Modulation mode indicates the modulation mode of the service, and Key is a key when the service is encrypted. Service ID is a service ID in an ESG, IP address is the IP address of the service, and IP platform_id identifies an IP platform. Available time indicates the available time to the terminal for HO processing. Charging includes fee information.

In step 212, the terminal measures the signal strength of each candidate cell based on HO solution I. The terminal then selects the best cell with the highest signal strength and sends a Confirm message regarding the selection to the network in step 213 and performs the handover in step 214. The Confirm message is formatted as follows.

**Table 3**

| |
|---|
| Confirm ID |
| Result ID |

Referring to Table 3, Confirm ID identifies the Confirm message and Result ID indicates whether the handover is successful or unsuccessful.

Process 2 is performed in the case where the terminal moves out of the broadcast network. The network sends an HO solution III message to the terminal in step 221. The format of the HO solution III message is given as

**Table 4**

| |
|---|
| HO Solution III ID |
| Candidate |
| Charging (optional) |

Referring to Table 4, HO solution III ID identifies the HO solution III message. Candidate provides access parameters such as frequency, an IP address, etc. to the terminal, indicating that the requested service can be provided on an interactive channel. Charging is an optional element that provides corresponding fee information.

In step 222, the terminal sends a Confirm message to the network. The Confirm message has the following configuration.

**Table 5**

| |
|---|
| Confirm ID |
| Result ID |

Referring to Table 5, Confirm ID identifies the Confirm message and Result ID indicates whether the handover is successful or unsuccessful.

Upon receipt of the Confirm message, the network processes a broadcasting-to-interactive handover in step 223 and the terminal performs the handover to the interactive network in step 224.

Process 3 takes place when the handover fails. The network sends an HO solution IV message to the terminal in step 231. The HO solution IV message includes the following information.

**Table 6**

| |
|---|
| HO Solution IV ID |
| Failure Result |

In Table 6, HO solution IV ID identifies the HO solution IV message and Failure result indicates that there is no solution for the handover.

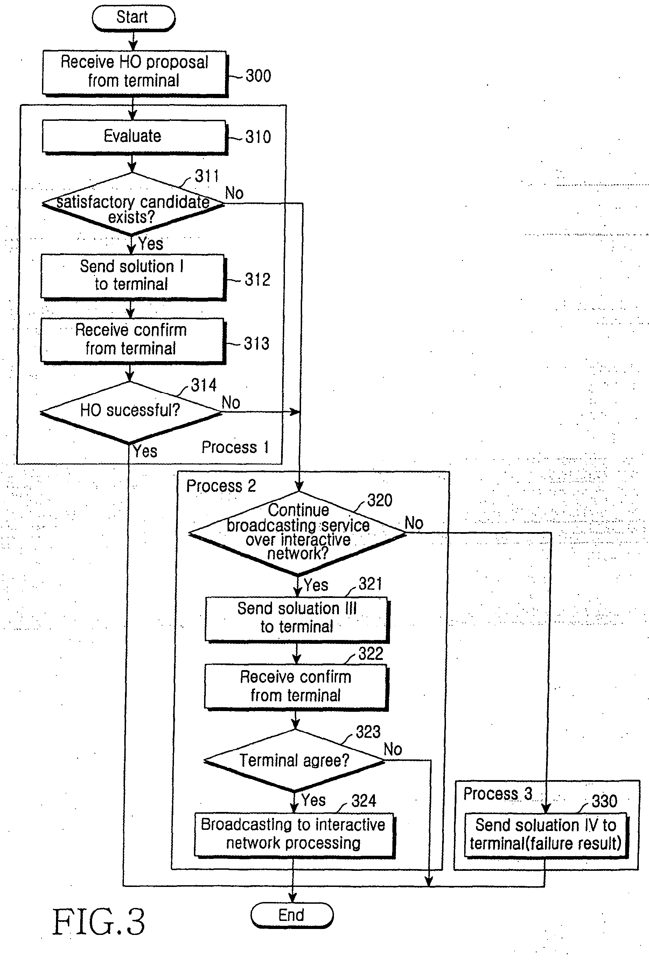

Referring to FIG. 3, the network receives an HO proposal message from the terminal in step 300 and performs Process 1 in step 310 through step 314. Specifically, the network evaluates information included in the HO proposal message in step 310 and determines whether there is a candidate cell for a handover in step 311. In the presence of the candidate cell, the network sends an HO solution I message to the terminal in step 312 and receives a Confirm message from the terminal in step 313. If the Confirm message indicates that the handover is successful in step 314, the network ends the procedure. On the other hand, if the Confirm message indicates that the handover is unsuccessful in step 314, the network performs Process 2 in step 320. In case of no candidate cell for the handover in step 311, the network also performs Process 2 in step 320.

In Process 2, the network determines whether to continue the on-going broadcasting service over an interactive network by handover in step 320. If deciding on the handover to the interactive network, the network sends an HO solution III message to the terminal in step 321 and receives a Confirm message from the terminal in step 322. In step 323, the network determines whether the terminal agrees on the handover to the interactive network.

If the terminal does not agree, the network ends the procedure without processing the handover. If the terminal agrees, the network processes the broadcasting-to-interactive handover in step 324 and ends the process.

On the other hand, if the network does not decide on the handover to the interactive network in step 320, it performs Process 3 in step 330. That is, the network sends HO solution IV message to the terminal, notifying it of the handover failure and then ends the procedure.

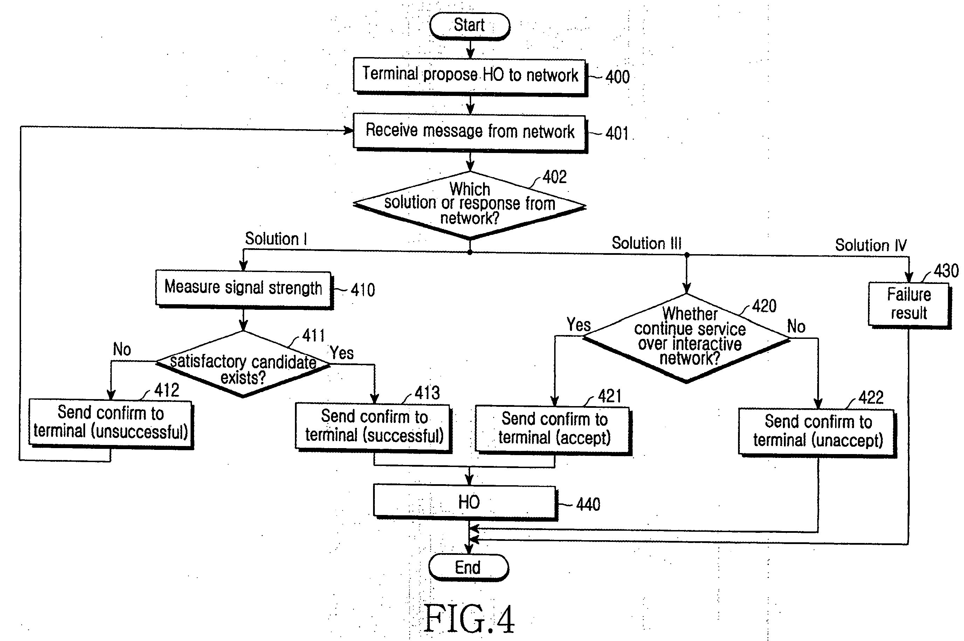

Referring to FIG. 4, the terminal sends an HO proposal message to the network in step 400 and receives a response message from the network in step 401. In step 402, the terminal detects the HO solution in the response message and operates in accordance with the HO solution.

In case of HO solution I, the terminal measures received signal strengths in step 410 and determines whether there is a candidate cell for a handover in step 411. In the absence of the candidate cell, the terminal sends a Confirm message indicating the handover failure to the network in step 412 and returns to step 401. In the presence of the candidate cell, in step 413 the terminal sends a Confirm message to the network indicating the handover success and performs the handover in step 440. Then the terminal ends the procedure.

In case of HO solution III, the terminal determines whether to perform the handover to an interactive network in step 420. Deciding on the handover to the interactive network, the terminal sends a Confirm message accepting the handover to the interactive network to the network in step 421 and performs the handover to the interactive network in step 440.

If the terminal decides not to perform the handover to the interactive network in step 420, in step 422 the terminal sends a Confirm message to the network rejecting the handover to the interactive network. Then the terminal ends the procedure without the handover.

In case of HO solution IV, the terminal ends the procedure, considering that the handover has failed in step 430.

### Embodiment 2

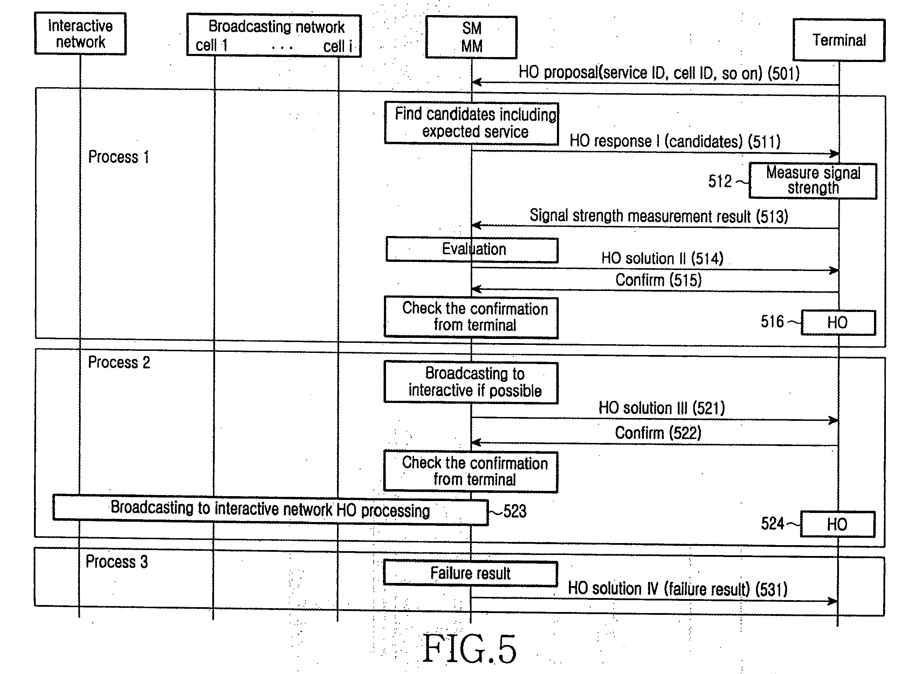

FIG. 5 is a signal flow diagram for a message exchange procedure for a handover according to another exemplary embodiment of the present invention.

Referring to FIG. 5, when the received signal strength of the terminal is decreased enough to require a handover, the terminal sends an HO proposal message to the network in step 501. The HO proposal message has the following information.

**Table 7**

| |
|---|
| HO proposal ID |
| User ID |
| Service ID |
| Cell_id |
| HO Quality Requirement (optional) |
| Time for one Signal Quality Measurement (optional) |
| Signal Measurement Result (optional) |

Referring to Table 7, HO proposal ID identifies the HO proposal. User ID provides the ID of the user that requests the handover. Service ID provides the ID of an on-going service and Cell ID identifies a serving cell to which the terminal currently belongs. HO quality requirement is an optional element that indicates to the network whether packet loss is acceptable or not during the handover. Time for one signal quality measurement is also optional. It indicates the time taken for the terminal to measure received signal strength. Signal measurement result, which is optional, provides signal strength measurements for signal frequencies.

The handover procedure is divided into Process 1, Process 2, and Process 3 according to HO solutions that the network presents.

In Process 1, the network communicates an HO solution to the terminal, and the terminal measures the received signal strengths of candidate cells and reports them to the network. The network sends an HO solution to the terminal based on reported signal strength measurements of candidate cells and then the terminal performs a handover based on the HO solution.

To be more specific, the network notifies the terminal of candidate cells for the handover by an HO response message in step 511. The terminal measures the received signal strengths of the candidate cells in step 512 and reports the measurements to the network by a Signal Strength measurement result message in step 513. The Signal Strength measurement result message provides the following information as shown on Table 8.

**Table 8**

| |
|---|
| Name |
| Signal Strength Measurement Result ID |
| Signal Quality |

In Table 8, Signal Strength measurement result ID identifies the Signal Strength measurement result message and Signal Quality provides the received signal strength measurements of the candidate cells.

In step 514, the network selects the best cells with the highest Signal Strength and sends an HO solution II message to the terminal. The HO solution II message is formatted as follows.

**Table 9**

| |
|---|
| HO Solution II ID |
| Candidate 1 |
| Candidate 2 |
| ... |
| Candidate i |
| Charging (optional) |

In Table 9, HO solution II ID identifies the HO solution II message. Candidate 1 to Candidate i indicates a candidate group to which the terminal can perform the handover, each including a frequency ID identifying the frequency of the candidate and a time ID indicating the time at which the handover can take place. Fee information is optionally set in Charging.

The terminal sends a Confirm message to the network in step 515 and performs the handover in step 516. The Confirm message is formatted as follows.

**Table 10**

| |
|---|
| Confirm ID |
| Result ID |

Referring to Table 10, Confirm ID identifies the Confirm message and Result ID indicates whether the handover is successful or unsuccessful.

Process 2 is performed in the case where the terminal moves out of the broadcast network. The network sends an HO solution III message to the terminal in step 521. The HO solution III message includes the following information.

**Table 11**

| |
|---|
| HO Solution III ID |
| Candidate |
| Charging (optional) |

Referring to Table 11, HO solution III ID identifies the HO solution III message. Candidate indicates the terminal to which the requested service is available on an interactive channel and provides access parameters such as frequency, IP address, etc. Charging is an optional element that provides corresponding fee information.

In step 522, the terminal sends a Confirm message to the network. The Confirm message has the following configuration as shown in Table 12.

**Table 12**

| |
|---|
| Confirm ID |
| Result ID |

Referring to Table 12, Confirm ID identifies the Confirm message and Result ID indicates whether the handover is successful or unsuccessful.

Upon receipt of the Confirm message, the network processes a broadcasting-to-interactive handover in step 523 and the terminal performs the handover to an interactive network in step 524.

Process 3 takes place when the handover fails. The network sends an HO solution IV message to the terminal in step 531. The HO solution IV message includes the following information.

**Table 13**

| |
|---|
| HO Solution IV ID |
| Failure Result |

In Table 13, HO solution IV ID identifies the HO solution IV message and Failure result indicates that there is no solution for the handover.

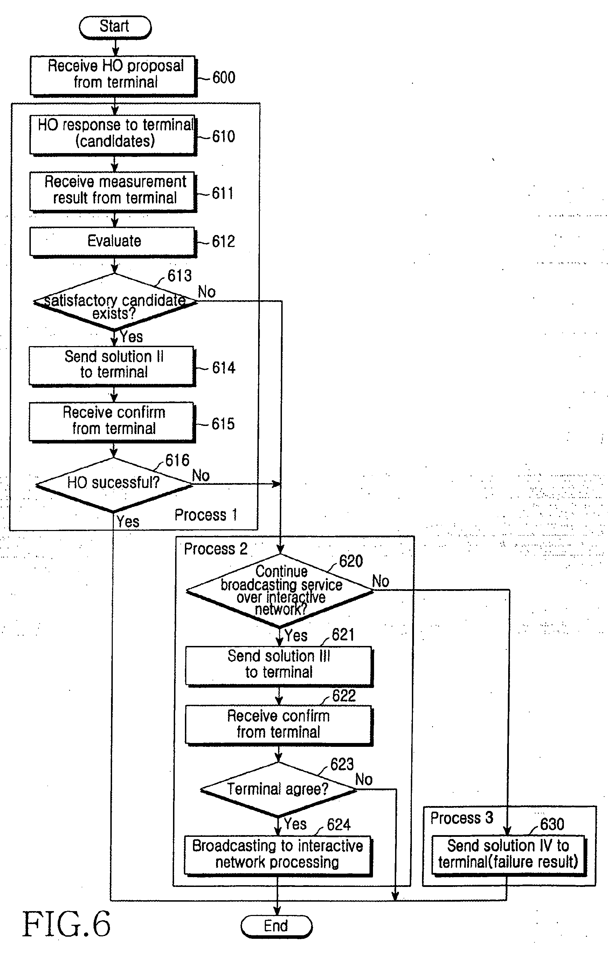

Referring to FIG. 6, the network receives an HO proposal message from the terminal in step 600 and performs Process 1 in step 610 through step 616. Specifically, the network sends an HO response message for the HO proposal message to the terminal in step 610 and receives received signal strength measurements from the terminal in step 611. The network evaluates the signal strength measurements in step 612 and determines whether there is a candidate cell for a handover in step 613.
In the presence of the candidate cell, the network sends an HO solution II message to the terminal in step 614 and receives a Confirm message from the terminal in step 615. If the Confirm message indicates that the handover is successful in step 616, the network ends the procedure of the present invention. On the other hand, if the Confirm message indicates that the handover is unsuccessful in step 616, the network performs Process 2 in step 620. In case of no candidate cell for the handover in step 613, the network also performs Process 2 in step 620.

In Process 2, the network determines whether to continue an on-going broadcasting service over an interactive network by handover in step 620. If deciding on the handover to the interactive network, the network sends an HO solution III message to the terminal in step 621 and receives a Confirm message from the terminal in step 622.

In step 623, the network determines whether the terminal agrees on the handover to the interactive network. If the terminal agrees, the network processes the broadcasting-to-interactive handover in step 624. If the terminal does not agree, the network ends the procedure without processing the handover.

On the other hand, if the network does not decide on the handover to the interactive network in step 620, it performs Process 3 in step 630. That is, the network sends an HO solution IV message to the terminal, notifying of the handover failure and then ends the procedure.

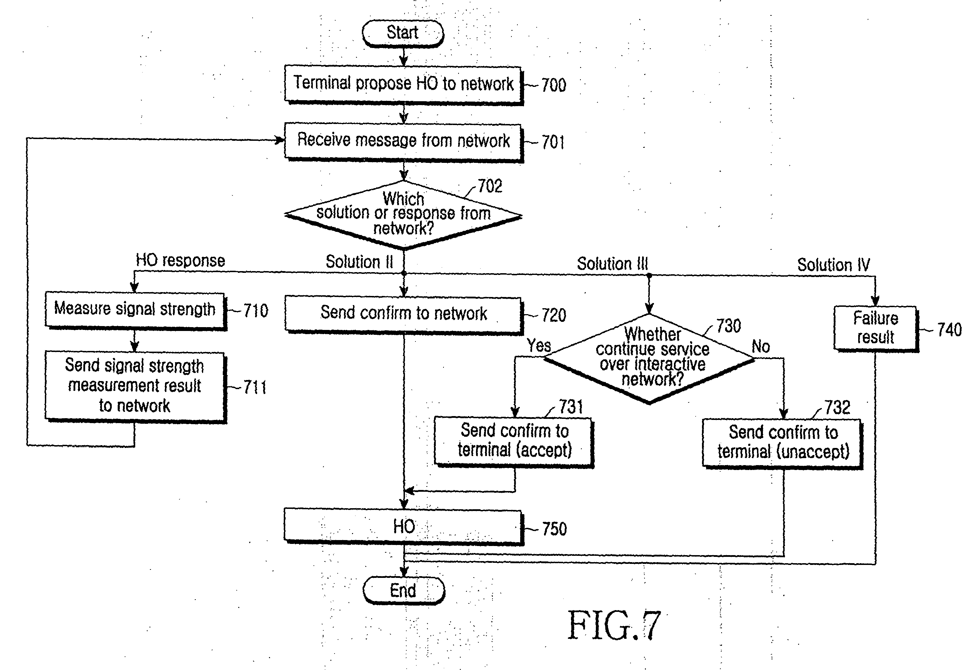

Referring to FIG. 7, the terminal sends an HO proposal message to the network in step 700 and receives a response message from the network in step 701. In step 702, the terminal determines which solution or response the response message delivers.

In case of an HO response message, the terminal measures received signal strengths in step 710 and reports them to the network in step 711. Then the terminal returns to step 701.

In case of an HO solution II, the terminal sends a Confirm message to the network 720 and performs the handover in step 750. Then the terminal ends the procedure.

In case of the HO solution III, the terminal determines whether to perform the handover to an interactive network in step 730. Deciding on the handover to the interactive network, the terminal sends a Confirm message accepting the handover to the interactive network to the network in step 731 and performs the handover to the interactive network in step 745. Then the terminal ends the procedure. If the terminal decides not to perform the handover to the interactive network in step 730, the terminal sends a Confirm message to the network rejecting the handover to the interactive network in step 732. Then the terminal ends the procedure without the handover.

In case of the HO solution IV, the terminal ends the procedure, considering that the handover has failed in step 740.

A method for providing HO information and a solution from the network to the terminal when a change has occurred to the network will be described next.

The following change events may occur in the network.

### 1. Service Discontinuation

The on-going service is stopped. In this case, if the terminal wants to continue the on-going service, it finds an intended service by handover or roaming. If neither handover nor roaming is available, the terminal just updates its database regarding the service and consumes another service.

### 2. Service Replacement

The on-going service is replaced with another service. For instance, in the case where service A is in progress and is not available 5 minutes later, service B can be provided instead of service A, if the terminal wants to continue the on-going service, it finds an intended service by handover or roaming. If neither handover nor roaming is available, the terminal just updates its database regarding the service and consumes another service or the substitute service.

### 3. Service Movement

The on-going service is moved to another place, such as another transport stream, another transmission frequency, another network, another IP platform, or the like. This implies that the content of the service is kept unchanged but is provided in a different transport method. This information is useful to the terminal, if the terminal still wants to track the service. In this case, if the terminal wants to continue the on-going service, it can track the service with the movement information. Otherwise, the terminal just updates its database regarding the service and consumes another service.

### 4. Service ID Change

A service ID is changed. It can be an ESG-level service ID, PSI/SI-level service ID, or service IP address and IP-level port number. In this case, the terminal updates the database regarding the service.

The terminal is also notified of the updated services. The terminal updates the database regarding the services. This change event information somehow affects service consumption of the terminal. Therefore, the network sends change event information to the terminal, if a change event has occurred to the network.

The change event information can be sent to the terminal in different ways. These include signaling of a change event message and transmission of the change event information in a notification message, an ESG, or PSI/SI, over a broadcast network or an interactive network. In the exemplary embodiments of the present invention, the change event information is delivered in the change event message, by way of example.

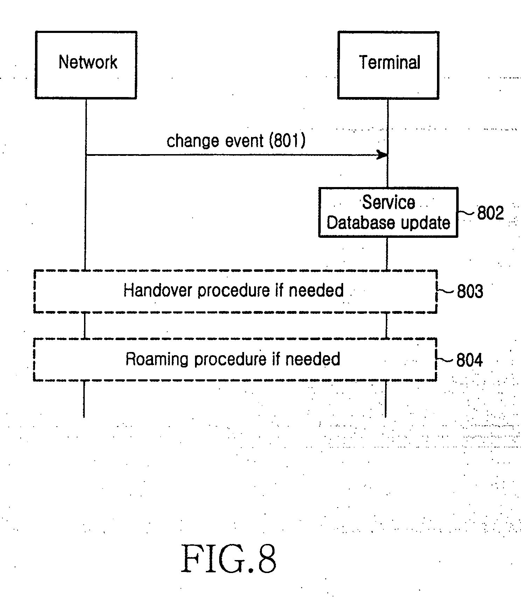

Referring to FIG. 8, when a change occurs in the network, the network sends a change event message to the terminal in step 801 and the terminal updates its service database based on information included in the change event message in step 802. When necessary, the terminal performs handover or roaming in step 803 or step 804. For details, refer to Korea Patent Application No. 2006-3684.

The handover procedure in case of a network change will be described below.

### Embodiment 3

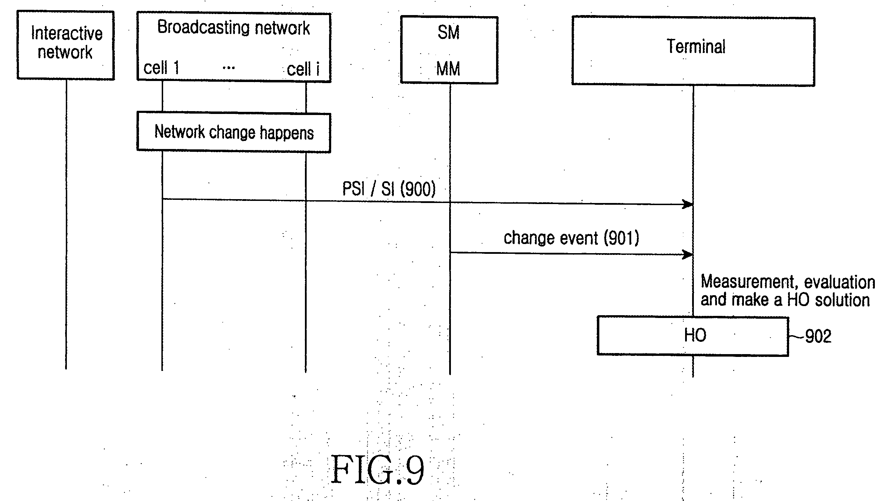

FIG. 9 is a signal flow diagram for a message exchange procedure for a handover according to an exemplary embodiment of the present invention.

Referring to FIG. 9, when a change event occurs in the network, the network sends PSI/SI to the terminal in step 900 and the MM of the SM sends a Change event message to the terminal in step 901.

The Change event message has the format illustrated in Table 14.

**Table 14**

| |
|---|
| Change Event ID |
| Change Event Type |
| IP platform ID |
| Network ID |
| Service ID |
| Service Provider ID |
| ESG provider ID |
| IP Address |
| Transport Stream ID |
| Original Network ID |
| Frequency |
| New Service ID |
| New Service Provider ID |
| New ESG Provider ID |
| New IP Address |
| New IP Platform ID |
| New Transport Stream ID |
| New Original Network ID |
| New Network ID |
| Private Data |
| T1 |
| T2(optional) |
| Network control indication |
| Handover candidate |
| Roaming candidate |

Referring to Table 14, Change event ID identifies the Change event message. Change event type identifies what has happened in the network. For example, 0001 indicates service discontinuation, 0010 indicates service replacement, 0011 indicates service movement, 0100 indicates service ID change, 0101 indicates newly updated service, and 0110 to 1111 are reserved for future use. IP platform ID identifies an IP platform, Network ID identifies the network, Service ID identifies the service, and Service Provider ID identifies a service provider. ESG provider ID is the ID of an ESG provider, Transport stream ID provides the ID of transport streams, and Original network ID is the ID of the original network. Frequency indicates a frequency at which the service is delivered. New service ID identifies a new service, New Service Provider ID identifies a new service provider, New IP address is a new IP address of this service, New IP platform ID identifies a new IP platform available to the current service, New transport stream ID provides a new transport stream ID, New original network ID provides a new original network ID, and New network ID identifies a new network in which the service is available. Private data is privately defined. For example, in case of service replacement, this field describes the new service and whether the new service is related to the old service. T 1 indicates time when the change starts in the network and T2 indicates time when the change is over in the network. T2 is optional. Network control indication indicates whether a network-controlled handover is mandatory or available. Handover candidate, which is optional, lists information about candidate cells for handover. Roaming candidate is also an optional field that lists information about candidate cells for roaming.

In accordance with this exemplary embodiment of the present invention, the Change event message is delivered over the broadcast network.

The terminal measures received signal strengths, evaluates them, presents an HO solution. Then it performs a handover in step 902.

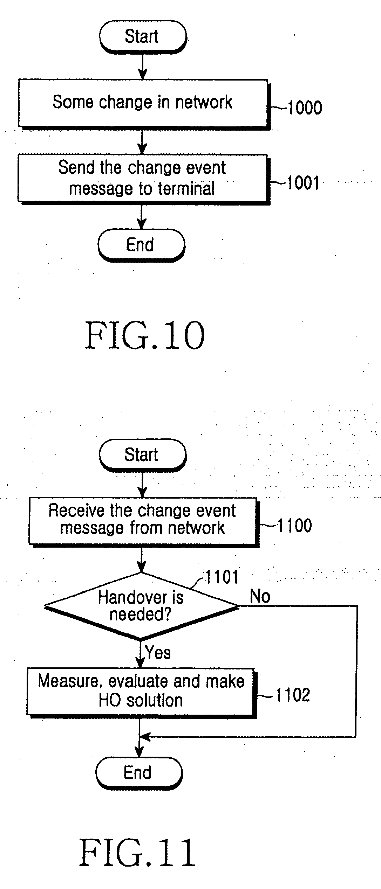

Referring to FIG. 10, when a change happens in the network in step 1000, the network notifies the terminal of the change event in PSI/SI and a Change event message in step 1001.

Referring to FIG. 11, the terminal receives HO information including a network change event in PSI/SI and a Change event message in step 1100 and determines whether a handover is required in step 1101. For example, if the network change event is related to the on-going service, the terminal decides on the handover. When determining that the handover is required, the terminal measures received signal strengths, evaluates them, and performs the handover in step 1102. On the contrary, if the handover is not needed, the terminal ends the procedure without the handover.

### Embodiment 4

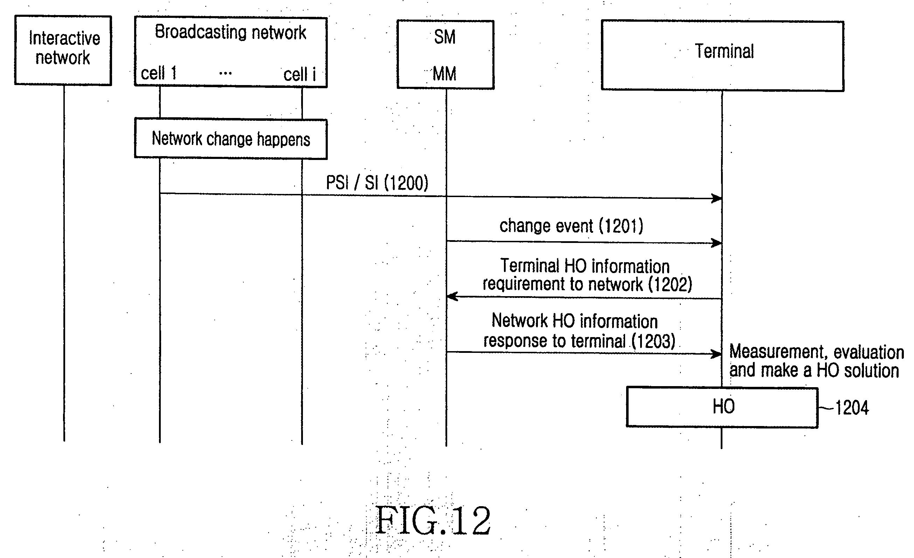

FIG. 12 is a signal flow diagram for a message exchange procedure for a handover according to another exemplary embodiment of the present invention.

Referring to Fig. 12, when a change occurs in the network, the network sends PSI/SI to the terminal in step 1200 and the SM of the MM sends a Change event message to the terminal in step 1201.

The Change event message has the format illustrated in Table 15.

**Table 15**

| |
|---|
| Change Event ID |
| Candidate (optional) |
| T1 |
| T2(optional) |
| Network Control Indication |

Referring to Table 15, Change event ID identifies the Change event message. Candidate is optional and provides additional information about the network change, including a service ID, an old frequency, and a new frequency. T1 indicates time when the change starts in the network and T2 indicates time when the change is over in the network. T2 is optional. Network control indication indicates whether a network-controlled handover is mandatory or available. In accordance with an exemplary embodiment of the present invention, the Change event message is delivered over the interactive network.

The terminal then measures the received signal strengths of neighboring cells, evaluates them, and makes an HO solution. In step 1202, the terminal sends helpful HO information to the network in a Terminal HO information requirement to network message. The Terminal HO information requirement to network message includes the following information.

**Table 16**

| |
|---|
| Terminal HO information requirement to Network ID |
| Frequency Requirement (optional) |
| Time Available Requirement (optional) |

Referring to Table 16, Terminal HO information requirement to network ID identifies the Terminal HO information requirement to network message. Frequency requirement provides a request for the frequency of a neighboring cell including an intended service, and Time available requirement provides a request for a time available for the intended service. Frequency requirement and Time available requirement are optional and at least one of these two optional fields is included in the message.

In step 1203, the network sends a Network HO information response to terminal message to the terminal. The Network HO information response to terminal message has the format illustrated in Table 17.

**Table 17**

| |
|---|
| Network HO Information Response to Terminal ID |
| Frequency Response |
| Time Available Response |

Referring to Table 17, Network HO information response to terminal ID identifies Network HO information response to terminal message. Frequency response indicates the frequency of a neighboring cell including the intended service, and Time available response indicates a time available for the intended service.

The terminal performs a handover in step 1204.

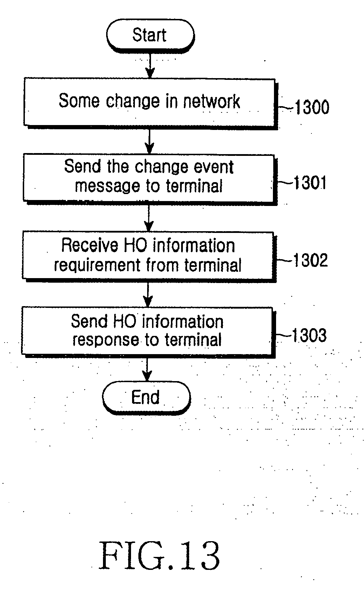

Referring to FIG. 13, when a change happens in the network in step 1300, the network notifies the terminal of the change event in PSI/SI and a Change event message in step 1301. Upon receipt of a Terminal HO information requirement to network message from the terminal in step 1302, the network replies to the terminal with a Network HO information response to terminal message in step 1303.

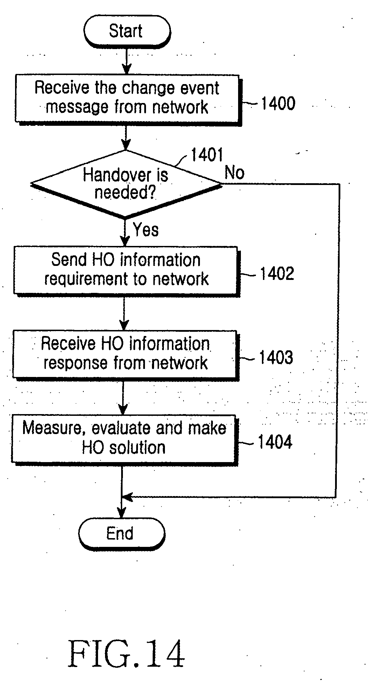

Referring to FIG. 14, the terminal receives HO information including a network change event in PSI/SI and a Change event message in step 1400 and determines if a handover is required in step 1401. For example, if the network change event is related to the on-going service, the terminal decides on the handover. When determining that the handover is required, the terminal requests HO information to the network by a Terminal HO information requirement to network message in step 1402 and then receives a Network HO information response to terminal message from the network in step 1403. In step 1404, the terminal measures received signal strengths, evaluates them, and performs the handover based on information included in the Network HO information response to terminal message. On the contrary, if the handover is not needed, the terminal ends the procedure, skipping steps 1402, 1403 and 1404.

In the meantime, the network may provide an interactive channel to the terminal to continue the on-gong service. In this way, regarding each of different change events, the network can notify the terminal of the change event by a Change event message.

### Embodiment 5

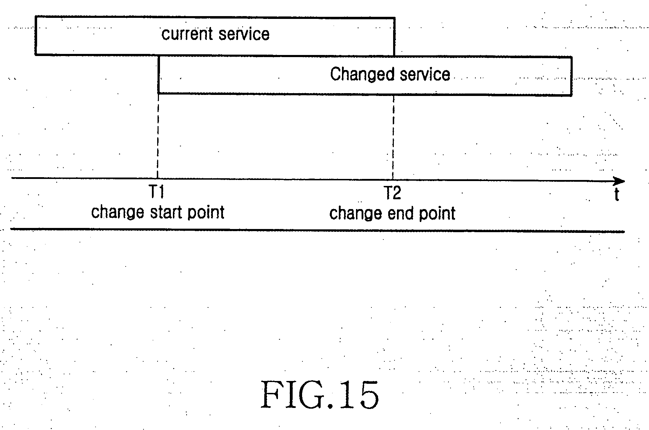

FIG. 15 illustrates a handover method according to a fifth exemplary embodiment of the present invention.

Referring to FIG. 15, T 1 denotes a change start time and T2 denotes a change end time. The change lasts between T 1 and T2. This change period may be fixed. In this case, the network simply notifies the terminal of the change end time, with no regard to the effect of the change on the terminal. Also, the change period may be variable. Then the network maintains the on-going service until the terminal completes the handover successfully. The change end time is affected by the handover result of the terminal.

One of possible change events is the change of service transmission frequency. The performance and coverage of a new frequency affects the handover result. The network collects measurements from terminals and adjusts transmission performance. The current service is stopped and the change period is finished until most terminals complete the handover successfully.

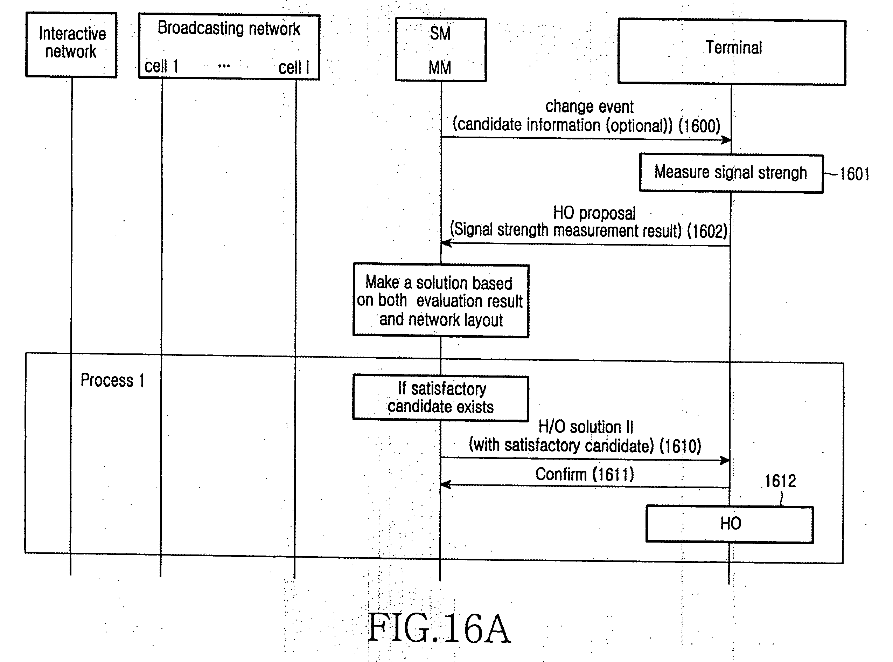

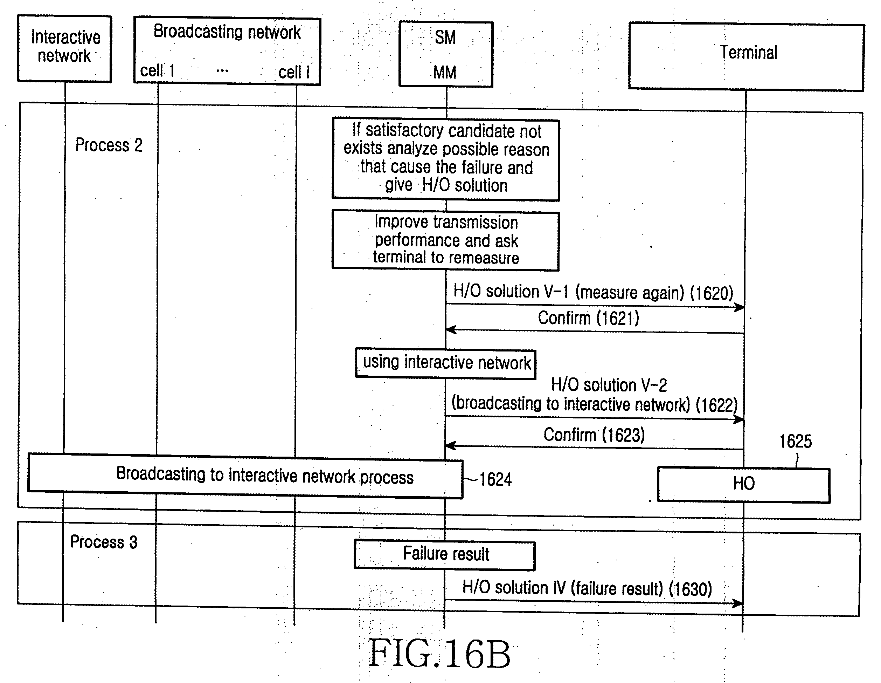

Referring to FIGs. 16A and 16B, when a change occurs in the network, the network notifies the terminal of the change event by a Change event message in step 1600. The Change event message may include information about candidate cells for a handover and has the following configuration.

**Table 18**

| |
|---|
| Change Event ID |
| Candidate (optional) |
| T1 |
| T2 (optional) |
| Network Control Indication |

Referring to Table 18, Change Event ID identifies the Change Event message. Candidate is optional and provides additional information about the network change, including a service ID, an old frequency, and a new frequency. T1 indicates time when the change starts in the network and T2 indicates time when the change is over in the network. T2 is optional. Network control indication indicates whether a network-controlled handover is mandatory or available.

The terminal measures received signal strengths in step 1601 and sends an HO proposal message including the signal strength measurements to the network in step 1602. The HO proposal message has the following message format.

**Table 19**

| |
|---|
| HO proposal ID |
| User ID |
| Service ID |
| Service Provider ID |
| ESG provider ID |
| IP Address |
| IP Platform ID |
| Service_id |
| Transport stream_id |
| Original network_id |
| Cell_id |
| Network_id |
| HO Quality Requirement (optional) |
| Time for one Signal Quality Measurement (optional) |
| Signal Measurement Result (optional) |

Referring to Table 19, HO proposal ID identifies the HO proposal. User ID provides the ID of the user that requests a handover. Service ID identifies the on-going service and Service Provider ID identifies a service provider. ESG provider ID identifies an ESG provider, IP address is the IP address of the service, and IP platform ID provides the ID of an IP platform. Service_id is a service ID in PSI/SI, Transport stream_id is the ID of a transport stream, Original network_id identifies an original network, Cell_id identifies a serving cell to which the terminal currently belongs to, and Network_id identifies the network. HO quality requirement is an optional element that indicates to the network whether packet loss is acceptable or not during the handover. Time for one signal quality measurement is also optional. It indicates the time taken for the terminal to measure received signal strengths. Signal measurement result, which is optional, provides signal strength measurements for signal frequencies.

Upon receipt of the HO proposal message, the network makes an HO solution according to the received signal strength measurements and a network layout.
Exemplary embodiments of the present invention present three HO solutions and processes for performing the HO solutions are respectively called Process 1, Process 2, and Process 3.

Process 1 is carried out in the case where there is a candidate cell for a handover.

In Process 1, the network sends an HO solution II message to the terminal in step 1610. The HO solution II message includes the following information as shown in Table 20.

**Table 20**

| |
|---|
| HO solution II ID |
| Candidate ID |
| Private Data |
| Service_id |
| Transport stream_id |
| Original network_id |
| Cell_id |
| Network_id |
| Frequency |
| Coding |
| Modulation mode |
| Key |
| Service ID |
| Service Provider ID |
| ESG provider ID |
| IP Address |
| IP platform id |
| Available Time |
| Charging (optional) |

In Table 20, HO solution II ID identifies the HO solution II message. Candidate ID distinguishes candidate cells. Private data is privately defined. It is used to describe whether a candidate service is identical to, a variation of, or associated with the current service. Service_id is a service ID in PSI/SI, Transport stream_id is the ID of a transport stream, Original network_id identifies the original network, Cell_id provides the ID of a cell, Network_id identifies the network, and Frequency is a frequency value. Coding indicates a coding type, Modulation mode indicates the modulation mode of the service, and Key is a key when the service is encrypted. Service ID is a service ID in an ESG, Service Provider ID identifies a service provider, and ESG provider ID identifies an ESG provider. IP address is the IP address of the service and IP platform_id identifies an IP platform. Available time indicates an available time to the terminal for HO processing. Charging is an optional field including fee information.

In step 1611, the terminal sends a Confirm message. The Confirm message is formatted as shown in Table 21.

**Table 21**

| |
|---|
| Confirm ID |
| Result ID |

Referring to Table 21, Confirm ID identifies the Confirm message and Result ID indicates whether the handover is successful or unsuccessful.

In step 1612, the terminal performs the handover.

Process 2 is performed in the absence of any candidate cell for a handover. The network analyses a possible cause of the failure and correspondingly presents an HO solution. After improving its transmission performance, the network asks the terminal to measure signal strengths again.

That is, the network sends an HO solution V-1 message to the terminal in step 1620. The format of the HO solution V-1 message is given as shown in Table 22.

**Table 22**

| |
|---|
| HO solution V-1 ID |
| Candidate ID |
| Private data |
| Service_id |
| Transport stream_id |
| Original network_id |
| Cell_id |
| Network_id |
| Frequency |
| Service ID |
| Service Provider ID |
| ESG provider ID |
| IP address |
| IP platform_id |
| Available time |
| Charging (optional) |

In Table 22, HO solution V-1 ID identifies the HO solution II message. Candidate ID distinguishes candidate cells. Private data is privately defined. It is used to describe whether a service from a candidate cell is identical to, a variation of, or associated with the current service. Service_id is a service ID in PSI/SI, Transport stream_id is the ID of a transport stream, Original network_id identifies the original network, Cell_id provides the ID of a cell, Network_id identifies the network, and Frequency is a frequency value. Service ID is a service ID in an ESG, Service Provider ID identifies a service provider, and an ESG provider ID identifies an ESG provider. IP address is the IP address of the service and IP platform_id identifies an IP platform. Available time indicates an available time to the terminal for HO processing. Charging is an optional field including fee information.

In step 1621, the terminal sends a Confirm message to the network. The Confirm message is formatted as shown in Table 23.

**Table 23**

| |
|---|
| Confirm ID |
| Result ID |

Referring to Table 23, Confirm ID identifies the Confirm message and Result ID indicates whether the handover is successful or unsuccessful.

If the service is not available over the broadcasting network, the network sends an HO solution V-2 message to the terminal in step 1622. The format of the HO solution V-2 message is given as shown in Table 24.

**Table 24**

| |
|---|
| HO solution V-2 ID |
| Candidate ID |
| Frequency |
| Interactive network_id |
| Service_id |
| Transport stream_id |
| Original network_id |
| Service ID |
| Service Provider ID |
| ESG provider ID |
| IP Address |
| IP platform_id |
| Charging (optional) |

In Table 24, HO solution V-2 ID identifies the HO solution II message. Candidate ID distinguishes candidate cells. Frequency indicates the frequency value of an interactive channel of a candidate cell. Interactive network_id identifies an interactive network. Service_id is a service ID in PSI/SI, Transport stream_id is the ID of a transport stream, Original network_id identifies the original network, Service ID is a service ID in an ESG, Service Provider ID identifies a service provider, and an ESG provider ID identifies an ESG provider. IP address is the IP address of the service and IP platform_id identifies an IP platform. Charging is an optional field including fee information.

In step 1623, the terminal sends a Confirm message to the network. The Confirm message is formatted as shown in Table 25.

**Table 25**

| |
|---|
| Confirm ID |
| Result ID |

Referring to Table 25, Confirm ID identifies the Confirm message and Result ID indicates whether the handover is successful or unsuccessful.

Upon receipt of the Confirm message, the network processes a broadcasting-to-interactive handover in step 1624 and the terminal performs the handover to the interactive network in step 1625.

Process 3 takes place when the handover is failed. The network sends an HO solution IV message to the terminal in step 1630. The HO solution IV message includes the following information.

**Table 26**

| |
|---|
| HO solution IV ID |
| Failure Result |

In Table 26, HO solution IV ID identifies the HO solution IV message and Failure Result indicates that there is no solution for the handover.

It can be further contemplated as another exemplary embodiment that the HO solution V-1 process (i.e. steps 1620 and 1621 of FIG. 6B) is not performed according to a change period adjusted by the network based on the handover result of the terminal.

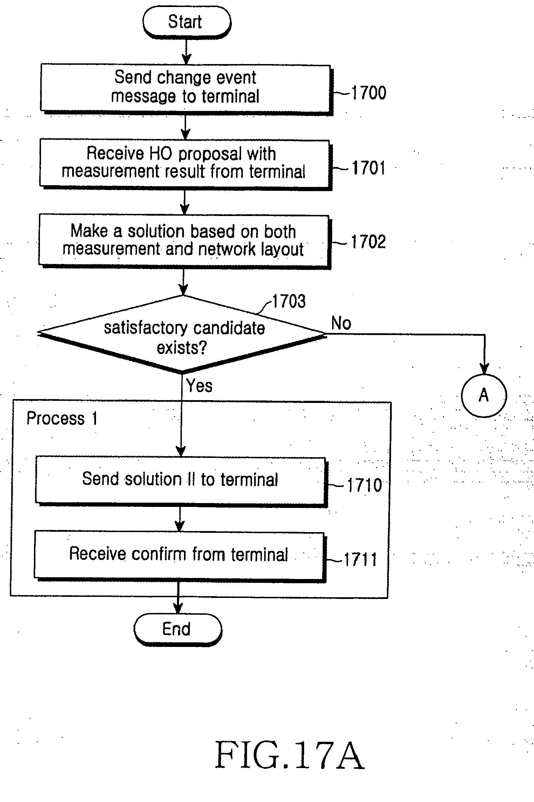

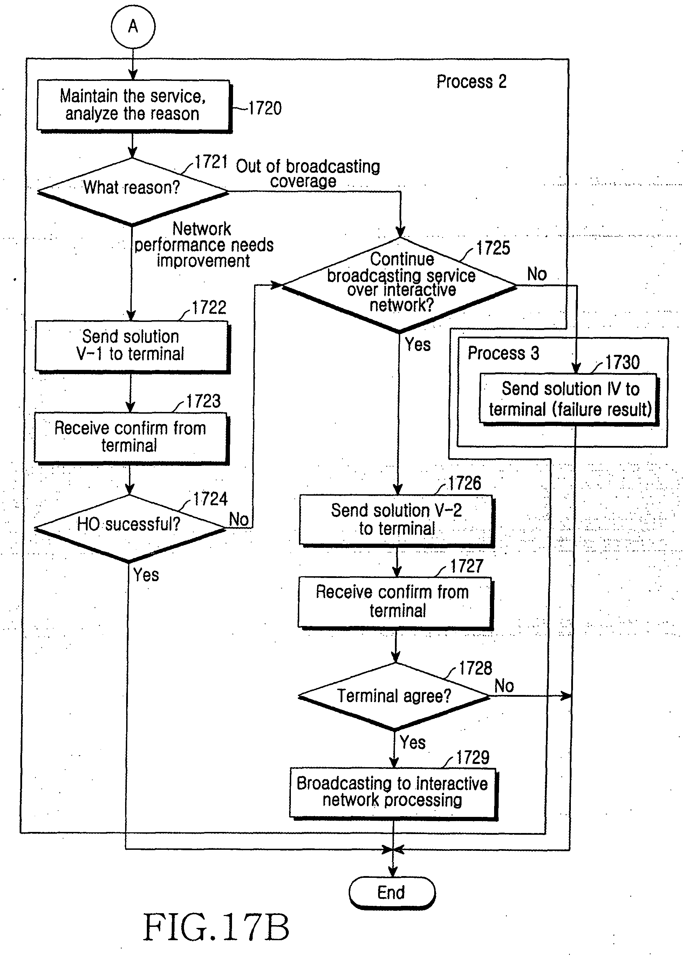

Referring to FIGs. 17A and 17B, the network sends a Change event message to the terminal in step 1700 and receives an HO proposal message with signal strength measurements from the terminal in step 1701. In step 1702, the network makes an HO solution based on the measurements and the layout of the network.

In step 1703, the network determines whether there is any candidate cell for a handover. In the presence of a candidate cell, the network performs Process 1 in steps 1710 and 1711. That is, the network sends an HO solution II to the terminal in step 1710 and receives a Confirm message from the terminal in step 1711. The network then ends the procedure.

In the absence of any candidate cell, the network performs Process 2. That is, the network analyzes the reason for the absence of any candidate cell, maintaining an on-going service in step 1721. If the analysis reveals that the performance of the network is to be improved, the network sends an HO solution V-1 to the terminal in step 1722 and receives a Confirm message from the terminal in step 1723. If the Confirm message indicates that the terminal has succeeded in the handover in step 1724, the network ends the procedure. If the handover is failed, the network performs step 1725.

Meanwhile, if the analysis tells that the terminal has moved out of the service area of the broadcasting network in step 1721, the network determines whether to continue the on-going service over the interactive network in step 1725. If the network decides on the handover to the interactive network, the network ends an HO solution V-2 to the terminal in step 1726 and receives a Confirm message from the terminal in step 1727. If the Confirm message accepts the handover to the interactive network, the network processes the broadcasting-to-interactive handover in step 1729. Then the process is over. On the contrary, if the Confirm message rejects the handover to the interactive network in step 1728, the network ends the algorithm without processing the broadcasting-to-interactive handover.

Meanwhile, if the network determines not to support the handover to the interactive network in step 1725, the network performs Process 3. Thus, the network sends an HO solution IV to the terminal in step 1730 and ends the algorithm.

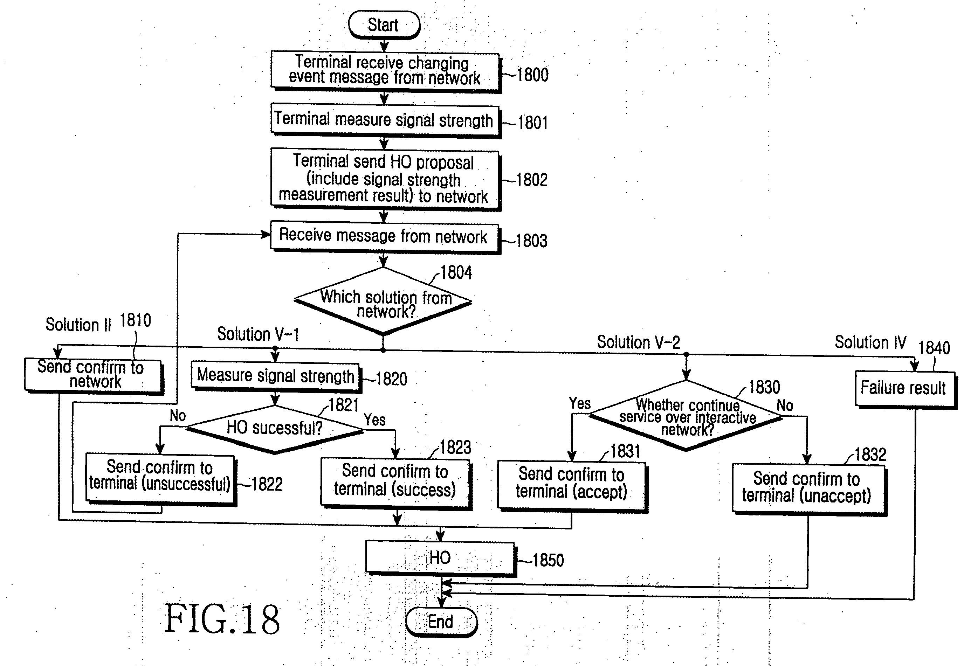

Referring to FIG. 18, the terminal receives a Change event message from the network in step 1800 and measures received signal strengths in step 1801. In step 1802, the terminal sends an HO proposal message with the measurements to the network. The terminal receives a response message from the network in step 1803 and determines which solution the response message includes in step 1804.

In case of HO solution II, the terminal sends a Confirm message to the network in step 1810 and performs the handover in step 1850. Then the terminal ends the procedure.

In case of HO solution V-1, the terminal measures received signal strengths in step 1820 and determines if the handover is successful based on the measurements in step 1821. If the handover is successful, the terminal sends a Confirm message indicating success to the network in step 1823 and performs the handover in step 1850. Then the terminal ends the procedure. If the handover is unsuccessful, the terminal sends a Confirm message indicating failure to the network in step 1823 and returns to step 1803.

In case of HO solution V-2, the terminal determines whether to perform the handover to the interactive network in step 1830. If the terminal decides on the handover to the interactive network, it sends a Confirm message accepting the handover to the interactive network in step 1831 and performs the handover in step 1850. Then the terminal ends the procedure. If the terminal determines not to perform the handover to the interactive network in step 1830, it sends a Confirm message to the network rejecting the handover to the interactive network in step 1832. Then the terminal ends the procedure.

In case of HO solution IV, in step 1840 the terminal ends the procedure, considering that the handover is failed.

The following exemplary embodiments of the present invention provide methods for attempting a terminal-controlled handover if the terminal moves to another place and thus its location is changed and then attempting a network-controlled handover if the terminal-controlled handover is failed. This procedure involves transmission of necessary information such as received signal strength measurements from the terminal to the network.

### Embodiment 6

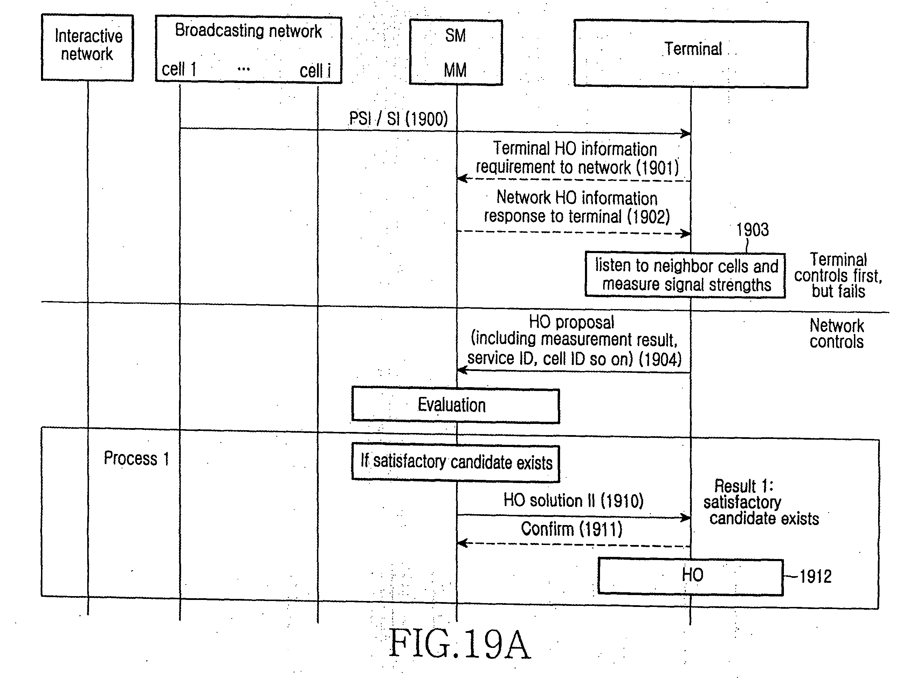

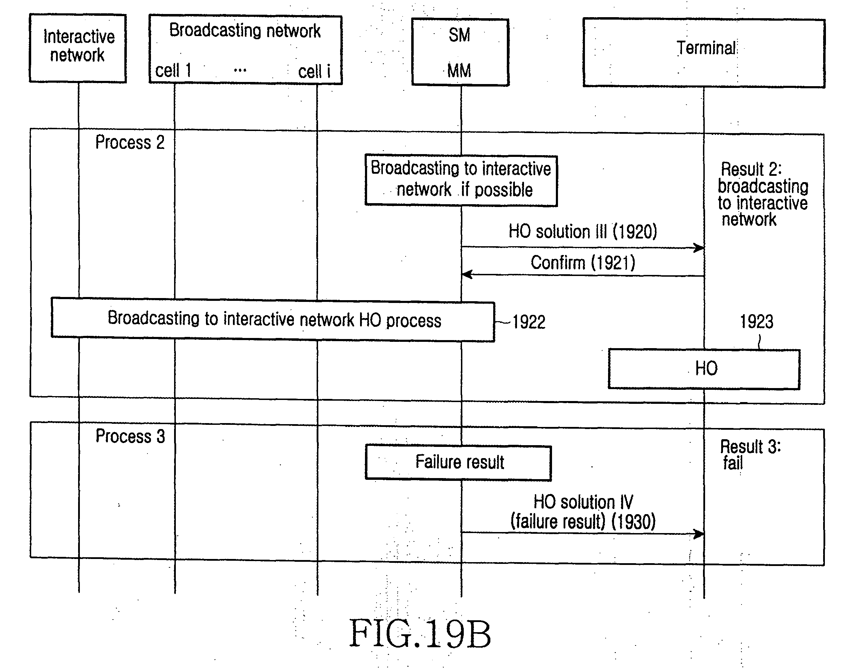

FIGs. 19A and 19B are a signal flow diagram for a message exchange procedure for a handover according to a sixth exemplary embodiment of the present invention. This procedure is for a handover triggered by the terminal's movement from its serving cell or home network.

Referring to FIGs. 19A and 19B, when the strength of a signal received from the serving cell is decreased, the terminal receives PSI/SI from the broadcasting network in step 1900 and sends a Terminal HO information requirement to network message to the SM of the MM in the network in step 1901. The Terminal HO information requirement to network message includes the following information as shown in Table 27.

**Table 27**

| |
|---|
| Terminal HO Information Requirement to Network ID |
| Frequency Requirement (optional) |
| Time Available Requirement (optional) |

Referring to Table 27, Terminal HO Information Requirement to Network ID identifies the Terminal HO Information Requirement to Network Message. Frequency Requirement provides a request for the frequency of a neighboring cell including an intended service, and Time Available Requirement provides a request for a time available for the intended service. Frequency Requirement and Time Available Requirement are optional.

In step 1902, the network sends a Network HO Information Response to Terminal Message to the terminal. The Network HO Information Response to Terminal Message has the format illustrated in Table 28.

**Table 28**

| |
|---|
| Network HO Information Response to Terminal ID |
| Frequency Response (optional) |
| Time Available Response (optional) |

Referring to Table 28, Network HO Information Response to Terminal ID identifies Network HO Information Response to Terminal message. Frequency Response indicates the frequency of a neighboring cell including the intended service, and Time Available Response indicates a time available for the intended service.

In step 1903, the terminal searches for neighboring cells, measures the received strengths of signals from the neighboring cells, and attempts a handover. If this terminal-controlled handover is failed, the terminal sends an HO proposal message to the network in step 1904. The HO proposal message has the following message format as shown in Table 29.

**Table 29**

| |
|---|
| HO proposal ID |
| User ID |
| Service ID |
| Provider ID |
| IP Address |
| IP Platform ID |
| Service_id |
| Transport stream_id |
| Original network_id |
| Cell_id |
| Network_id |
| HO Quality Requirement (optional) |
| Time for one Signal Quality Measurement (optional) |
| Signal Measurement Result |
| Signal Frequency |
| Signal Quality |

Referring to Table 29, HO proposal ID identifies the HO proposal message. User ID provides the ID of the user that requests a handover. Service ID provides the ID of the on-gong broadcasting service that the user is viewing.

Provider ID identifies a provider that can be an ESG provider, a service provider, a network provider, or the like. IP Address is the IP address of the service and IP platform ID provides the ID of an IP platform. Service_id is a PSI/SI-level service ID, Transport stream_id is the ID of a transport stream, Original network_id identifies an original network, Cell_id identifies a serving cell to which the terminal currently belongs to, and Network_id identifies the network. HO Quality Requirement is an optional element that indicates to the network whether packet loss is acceptable or not during the handover. Time for one Signal Quality Measurement is also optional. It indicates the time taken for the terminal to measure received signal strengths. Signal Measurement Result provides signal strength measurements for signal frequencies, which are reported to the network, for detecting a candidate cell. Signal Frequency indicates the measured signal frequencies. Signal Quality provides signal qualities at the signal frequencies.

Upon receipt of the HO proposal message, the network evaluates information included in the HO proposal message and performs Process 1, Process 2, or Process 3 according to the evaluation result.

Process 1 is carried out in the case where there is a candidate cell for a handover.

In Process 1, the network sends an HO solution II message to the terminal in step 1910. The HO solution II message includes the following information shown in Table 30.

**Table 30**

| |
|---|
| HO solution II ID |
| Candidate ID |
| Private Data |
| Service_id |
| Transport stream_id |
| Original network_id |
| Cell_id |
| Network_id |
| Frequency |
| Coding |
| Modulation Mode |
| Key |
| Service ID |
| Provider ID |
| IP Address |
| IP platform_id |
| Available Time |
| Charging (optional) |

In Table 30, HO solution II ID identifies the HO solution II message. Candidate ID distinguishes candidate cells. Private data is privately defined. It is used to describe if a candidate service is identical to, a variation of, or associated with the current service. Service_id is a service ID in PSI/SI, Transport stream_id is the ID of a transport stream, Original network_id identifies the original network, Cell_id provides the ID of a cell, Network_id identifies the network, and Frequency is a frequency value. Coding indicates a coding type, Modulation Mode indicates the modulation mode of the service, and Key is a key when the service is encrypted. Service ID is a service ID in an ESG, Provider ID identifies a service provider that can be an ESG provider, a service provider, a network provider or the like. IP Address is the IP address of the service and IP platform_id identifies an IP platform. Available Time indicates an available time to the terminal for HO processing. Charging is an optional field including fee information.
In step 1911, the terminal sends a Confirm message to the network. The Confirm message is formatted as shown in Table 31.

**Table 31**

| |
|---|
| Confirm ID |
| Result ID |

Referring to Table 31, Confirm ID identifies the Confirm message and Result ID indicates whether the handover is successful or unsuccessful.

In step 1912, the terminal performs the handover.

Process 2 is performed in the absence of any candidate cell for a handover. The network attempts a handover to an interactive network.

That is, the network sends an HO solution III message to the terminal in step 1920. The format of the HO solution III message is given as shown in Table 32.

**Table 32**

| |
|---|
| HO solution III ID |
| Candidate ID |
| Frequency |
| Interactive network_id |
| Service_id |
| Transport stream_id |
| Original network_id |
| Service ID |
| Provider ID |
| IP Address |
| IP platform_id |
| Charging (optional) |
| Coding |
| Modulation Mode |
| Key |

In Table 32, HO solution III ID identifies the HO solution II message. Candidate ID distinguishes candidate cells. Frequency indicates the frequency value of an interactive channel. Interactive network_id identifies an interactive network. Service_id is a service ID in PSI/SI, Transport stream_id is the ID of a transport stream, Original network_id identifies the original network, Service ID is a service ID in an ESG, and Provider ID identifies a service provider that can be an ESG provider, a service provider, a network provider, or the like. IP Address is the IP address of the service and IP platform_id identifies an IP platform. Charging is an optional field including fee information. Coding indicates a coding type, Modulation Mode indicates the modulation mode of the service, and Key is a key when the service is encrypted.

In step 1921, the terminal sends a Confirm message to the network. The Confirm message is formatted as shown in Table 33.

**Table 33**

| |
|---|
| Confirm ID |
| Result ID |

Referring to Table 33, Confirm ID identifies the Confirm message and Result ID indicates whether the handover is successful or unsuccessful.

Upon receipt of the Confirm message, the network processes a broadcasting-to-interactive handover in step 1922 and the terminal performs the handover to the interactive network in step 1923.

Process 3 takes place when the handover is failed. In Process 3, the network sends an HO solution IV message to the terminal in step 1930. The HO solution IV message includes the following information shown in Table 34.

**Table 34**

| |
|---|
| HO solution IV ID |
| Failure Result |

In Table 34, HO solution IV ID identifies the HO solution IV message and Failure Result indicates that there is no solution for the handover.

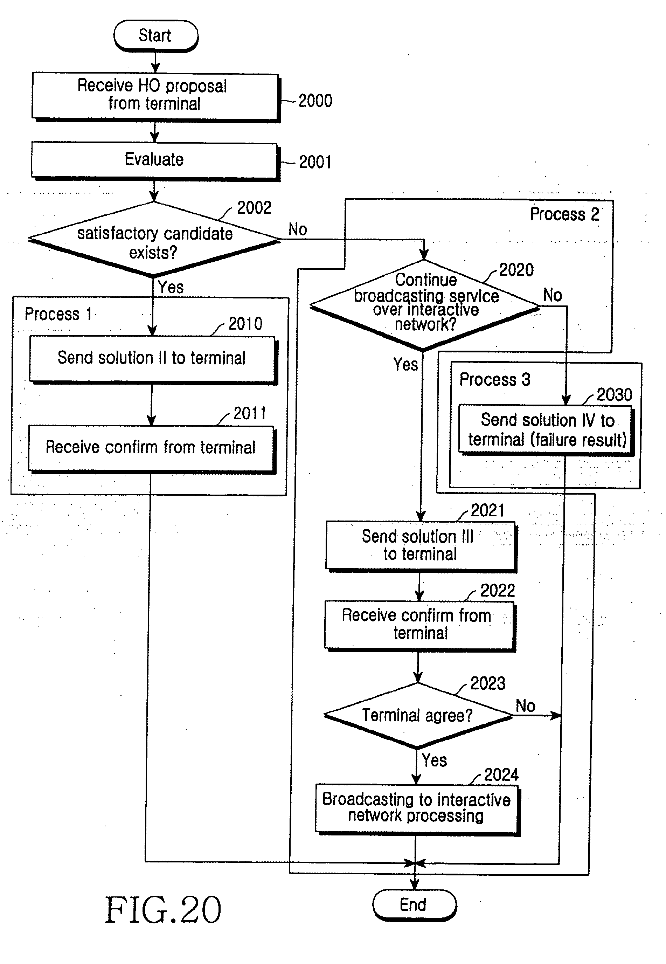

Referring to FIG. 20, the network receives an HO proposal message from the terminal in step 2000 and evaluates information included in the HO proposal message in step 2001. In step 2002, the network determines whether there is a candidate cell for a handover.

In the presence of the candidate cell, the network performs Process 1. In the absence of any candidate cell, the network performs Process 2.

In Process 1, the network sends an HO solution II message to the terminal in step 2010 and receives a Confirm message from the terminal in step 2011. Then the network ends the procedure.

In Process 2, the network determines whether to continue on-going broadcasting service over the interactive network by handover in step 2020. If the handover to the interactive network is decided, the network sends an HO solution III message to the terminal in step 2021 and receives a Confirm message from the terminal in step 2022. In step 2023, the network determines if the terminal agrees on the handover to the interactive network based on information included in the Confirm message.

If the terminal agrees, the network processes the broadcasting-to-interactive handover in step 2024 and ends the procedure. If the terminal does not agree, the network ends the procedure without processing the handover.
On the other hand, if the network does not decide on the handover to the interactive network in step 2020, it performs Process 3 in step 2030. That is, the network sends HO solution IV message to the terminal, notifying it of the handover failure and then ends the procedure.

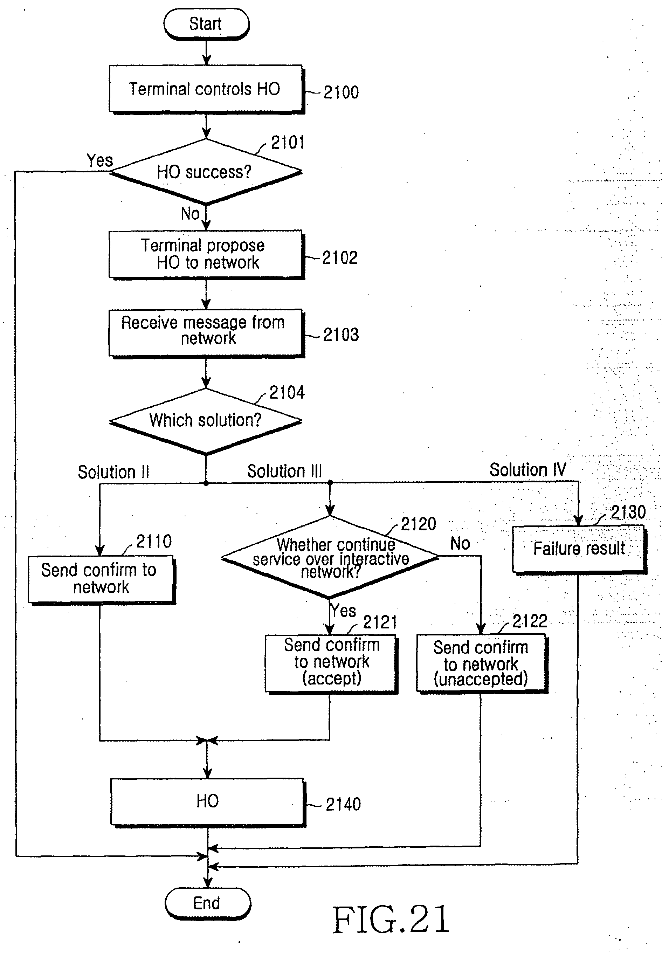

Referring to FIG. 21, the terminal attempts a terminal-controlled handover in step 2100 and determines if the handover is successful in step 2101. If the handover is successful, the terminal ends the procedure. If the handover is unsuccessful, the terminal sends an HO proposal message to the network in step 2102 and receives a response message from the network in step 2103. In step 2104, the terminal detects the HO solution in the response message.

In case of HO solution II, the terminal sends a Confirm message to the network in step 2110 and performs the handover in step 2140. Then the terminal ends the process.

In case of HO solution III, the terminal determines whether to continue an on-going service over an interactive network in step 2120. Deciding on the handover to the interactive network, the terminal sends a Confirm message to the network accepting the handover to the interactive network in step 2121 and performs the handover to the interactive network in step 2140. If the terminal decides not to perform the handover to the interactive network in step 2120, the terminal sends a Confirm message to the network rejecting the handover to the interactive network in step 2122. Then the terminal ends the procedure without the handover.

In case of HO solution IV, the terminal ends the procedure, considering that the handover has failed in step 2130.

### Embodiment 7

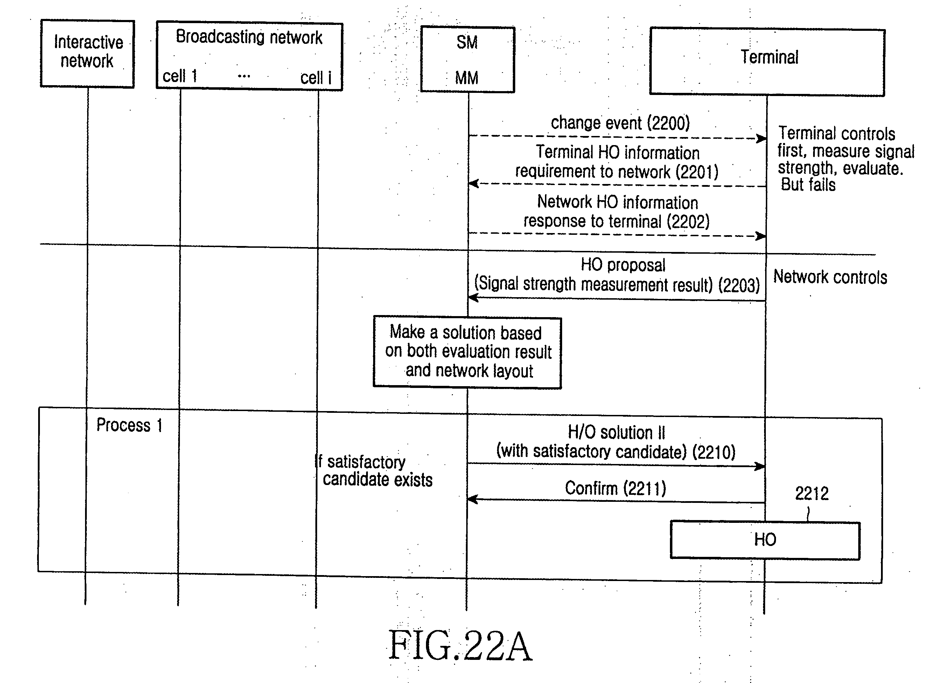

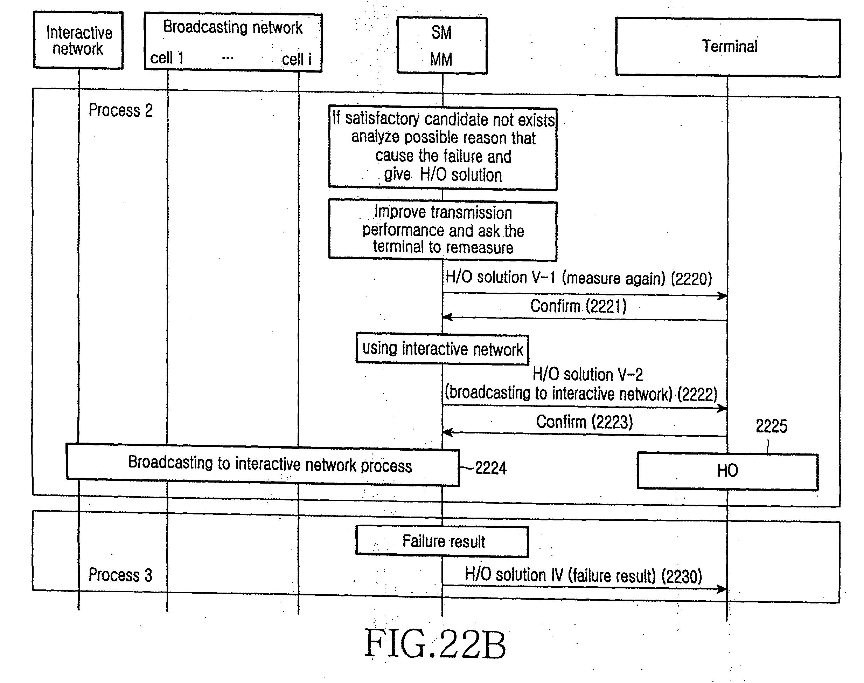

FIGs. 22A and 22B are signal flow diagrams for a message exchange procedure for a handover according to a seventh exemplary embodiment of the present invention.

The following exemplary embodiment of the present invention provides a method for notifying the terminal of the change to thereby trigger a handover for the terminal when a change occurs to the network.

Referring to FIGs. 22A and 22B, when a change occurs in the network, the network notifies the terminal of the change event by a Change event message in step 2200. The Change event message has the following configuration shown in Table 35.

**Table 35**

| |
|---|
| Change Event ID |
| Change Event Type |
| IP Platform ID |
| Network ID |
| Service ID |
| Provider ID |
| IP Address |
| Transport Stream ID |
| Original Network ID |
| Frequency |
| New Service ID |
| New Provider ID |
| New IP Address |
| New IP Platform ID |
| New Transport Stream ID |
| New Original Network ID |
| New Network ID |
| Coding |
| Modulation Mode |
| Key |
| Private Data |
| T1 |
| T2 (optional) |
| Network Control Indication |

Referring to Table 35, Change Event ID identifies the Change Event Message. Change Event Type identifies what has happened in the network. For example, 0001 indicates service discontinuation, 0010 indicates service replacement, 0011 indicates service movement, 0100 indicates service ID change, 0101 indicates newly updated service, and 0110 to 1111 are reserved for future use. IP platform ID identifies an IP platform, Network ID identifies the network, Service ID identifies the service, and Provider ID identifies a provider that can be a service provider, an ESG provider, a network provider, or the like. Transport Stream ID provides the ID of transport streams, and Original Network ID is the ID of the original network. Frequency indicates a frequency at which the service is delivered. New Service ID identifies a new service, New Provider ID identifies a new service provider, New IP Address is a new IP address of this service, New IP platform ID identifies a new IP platform available to the current service, New Transport Stream ID provides a New Transport Stream ID, New Original Network ID provides a New Original Network ID, and New Network ID identifies a new network in which the service is available. Coding indicates a coding type, Modulation Mode indicates the modulation mode of the service, and Key is a key when the service is encrypted. Private Data is privately defined. For example, in case of service replacement, this field describes the new service and whether the new service is related to the old service. T1 indicates time when the change starts in the network and T2 indicates time when the change is over in the network. T2 is optional. Network Control Indication indicates whether a network-controlled handover is mandatory or available.

The terminal sends a Terminal HO information requirement to network message to the network in step 2201. The Terminal HO information requirement to network message includes the following information shown in Table 36.

**Table 36**

| |
|---|
| Terminal HO Information Requirement to Network ID |
| Frequency Requirement |
| Time Available Requirement |

Referring to Table 36, Terminal HO Information Requirement to Network ID identifies the Terminal HO information requirement to network message. Frequency Requirement provides a request for the frequency of a neighbor cell including an intended service, and Time Available Requirement provides a request for a time available for the intended service. Frequency Requirement and Time Available Requirement are optional and at least one of these two optional fields is included in the message.

In step 2202, the network sends a Network HO Information Response to Terminal Message to the terminal. The Network HO Information Response to Terminal Message has the format illustrated in Table 37.

**Table 37**

| |
|---|
| Network HO Information Response to Terminal ID |
| Frequency Response |
| Time Available Response |

Referring to Table 37, Network HO Information Response to Terminal ID identifies Network HO Information Response to Terminal Message. Frequency Response indicates the frequency of a neighboring cell including the intended service, and Time Available Response indicates a time available for the intended service.

The terminal then searches for neighboring cells, measures received signal strengths, and attempts a terminal-controlled handover. If the terminal-controlled handover attempt fails, it sends an HO Proposal Message to the network in step 2203. The HO Proposal Message has the following message format shown in Table 38.

**Table 38**

| |
|---|
| HO Proposal ID |
| User ID |
| Service ID |
| Cell ID |
| HO Quality Requirement (optional) |
| Time for one Signal Quality Measurement (optional) |
| Signal Measurement Result (optional) |

Referring to Table 38, HO Proposal ID identifies the HO proposal. User ID provides the ID of the user that requests a handover. Service ID identifies the on-going service and Cell ID identifies the serving cell of the user. HO Quality Requirement is an optional element that indicates to the network whether packet loss is acceptable or not during the handover. Time for one Signal Quality Measurement is also optional. It indicates the time taken for the terminal to measure received signal strengths. Signal Measurement Result, which is optional, provides signal strength measurements for signal frequencies.

Upon receipt of the HO Proposal Message, the network performs an evaluation according to the received information and a network layout, makes an HO solution based on the evaluation, and performs Process 1, Process 2, or Process 3 according to the HO solution.

Process 1 is carried out in the case where there is a candidate cell for the handover.

In Process 1, the network sends an HO solution II message to the terminal in step 2210. The HO solution II message includes the following information shown in Table 39.

**Table 39**

| |
|---|
| HO Solution II ID |
| Candidate 1 |
| Candidate 2 |
| ... |
| Candidate i |
| Charging (optional) |

In Table 39, HO solution II ID identifies the HO solution II message. Candidate 1 to Candidate i indicates a candidate group to which the terminal can perform the handover, each including a Frequency ID identifying the frequency of the candidate and a Time ID indicating time at which the handover can be performed. Fee information is optionally set in Charging.

In step 2211, the terminal sends a Confirm message. The Confirm message is formatted as shown in Table 40.

**Table 40**

| |
|---|
| Confirm ID |
| Result ID |

Referring to Table 40, Confirm ID identifies the Confirm message and Result ID indicates whether the handover is successful or unsuccessful.

In step 2212, the terminal performs the handover.

Process 2 is performed in the absence of any candidate cell for a handover. The network analyses a possible cause of the failure and correspondingly presents an HO solution. After improving its transmission performance, the network asks the terminal to measure signal strengths again.

That is, the network sends an HO solution V-1 message to the terminal in step 2220. The format of the HO solution V-1 message is given as shown in Table 41.

**Table 41**

| |
|---|
| HO solution V-1 ID |
| Candidate ID |
| Private Data |
| Service_id |
| Transport stream_id |
| Original network_id |
| Cell_id |
| Network_id |
| Frequency |
| Service ID |
| Provider ID |
| IP Address |
| IP platform_id |
| Available Time |
| Charging (optional) |
| Coding |
| Modulation Mode |
| Key |

In Table 41, HO solution V-1 ID identifies the HO solution II message. Candidate ID distinguishes candidate cells. Private Data is privately defined. It is used to describe whether a service from a candidate cell is identical to, a variation of, or associated with the current service. Service_id is a service ID in PSI/SI, Transport stream_id is the ID of a transport stream, Original network_id identifies the original network, Cell_id provides the ID of a cell, Network_id identifies the network, and Frequency is a frequency value. Service ID is a service ID in an ESG and Provider ID identifies a provider that can be a service provider, an ESG provider ID, a network provider, or the like. IP Address is the IP address of the service and IP platform_id identifies an IP platform. Available Time indicates an available time to the terminal for HO processing. Charging is an optional field including fee information. Coding indicates a coding type, Modulation Mode indicates the modulation mode of the service, and Key is a key when the service is encrypted.

In step 2221, the terminal sends a Confirm message to the network. The Confirm message is formatted as shown in Table 42.

**Table 42**

| |
|---|
| Confirm ID |
| Result ID |

Referring to Table 42, Confirm ID identifies the Confirm message and Result ID indicates whether the handover is successful or unsuccessful.

If the service is not available over the broadcasting network, the network sends an HO solution V-2 message to the terminal in step 2222. The format of the HO solution V-2 message is given as Table 43.

**Table 43**

| |
|---|
| HO Solution V-2 ID |
| Candidate ID |
| Frequency |
| Interactive network_id |
| Service_id |
| Transport stream_id |
| Original network_id |
| Service ID |
| Provider ID |
| IP Address |
| IP platform_id |
| Charging (optional) |
| Coding |
| Modulation mode |
| Key |

In Table 43, HO solution V-2 ID identifies the HO solution II message. Candidate ID distinguishes candidate cells. Frequency indicates the frequency value of an interactive channel of a candidate cell. Interactive network_id identifies an interactive network. Service_id is a service ID in PSI/SI, Transport stream_id is the ID of a transport stream, Original network_id identifies the original network, Service ID is a service ID in an ESG, and Provider ID identifies a provider that can be a service provider, an ESG provider ID, a network provider, or the like. IP Address is the IP address of the service and IP platform_id identifies an IP platform. Charging is an optional field including fee information. Coding indicates a coding type, Modulation Mode indicates the modulation mode of the service, and Key is a key when the service is encrypted.

In step 2223, the terminal sends a Confirm message to the network. The Confirm message is formatted as shown in Table 44.

**Table 44**

| |
|---|
| Confirm ID |
| Result ID |

Referring to Table 44, Confirm ID identifies the Confirm message and Result ID indicates whether the handover is successful or unsuccessful.

Upon receipt of the Confirm message, the network processes a broadcasting-to-interactive handover in step 2224 and the terminal performs the handover to the interactive network in step 2225.

Process 3 takes place when the handover is failed. The network sends an HO solution IV message to the terminal in step 2230. The HO solution IV message includes the following information as shown in Table 45.

**Table 45**

| |
|---|
| HO Solution IV ID |
| Failure Result |

In Table 45, HO solution IV ID identifies the HO solution IV message and Failure Result indicates that there is no solution for the handover.

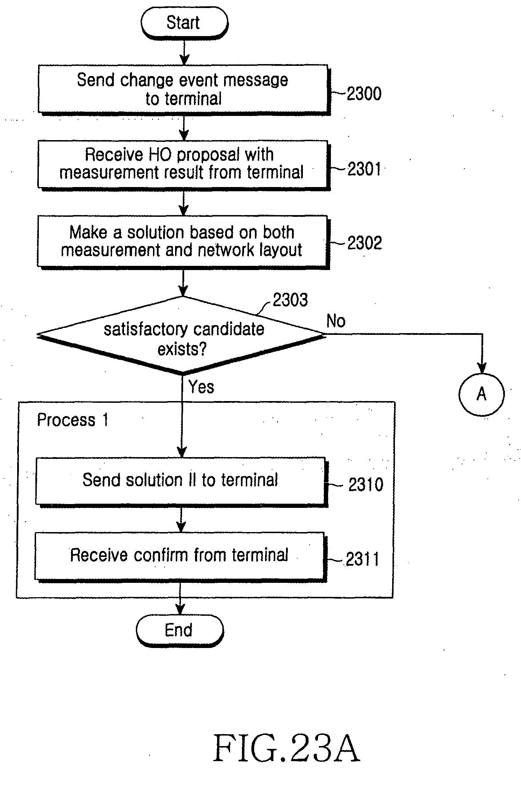

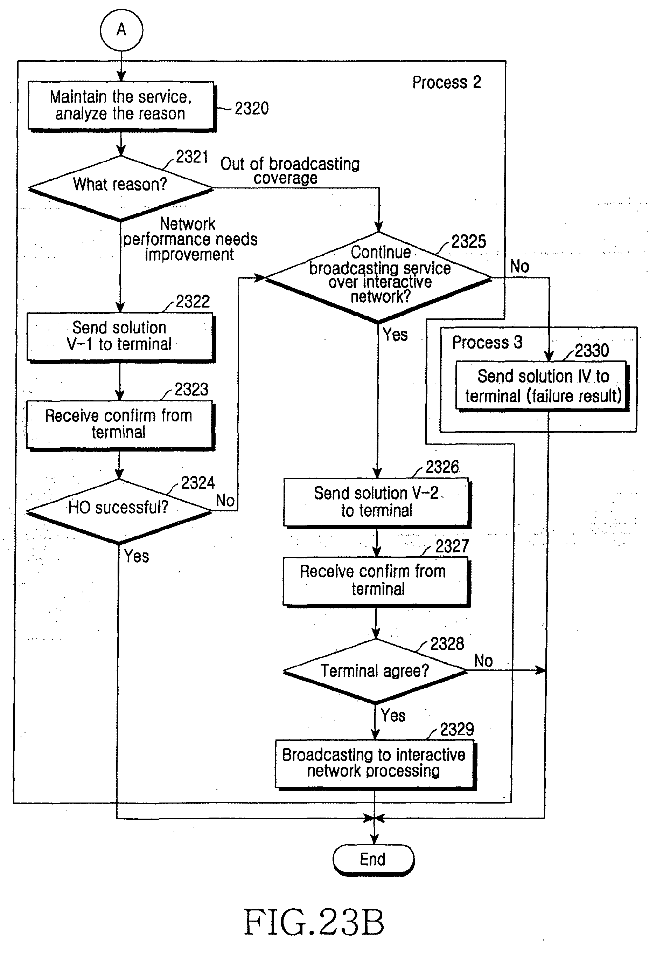

Referring to FIGs. 23A and 23B, the network sends a Change Event Message to the terminal in step 2300 and receives an HO Proposal Message with signal strength measurements from the terminal in step 2301. In step 2302, the network makes an HO solution based on the measurements and the layout of the network.

In step 2303, the network determines if there is any candidate cell for a handover. In the presence of a candidate cell, the network performs Process 1 in steps 2310 and 2311. That is, the network sends HO solution II to the terminal in step 2310 and receives a Confirm message from the terminal in step 2311. The network then ends the procedure of the present invention.
In the absence of any candidate cell, the network performs Process 2. That is, the network analyzes the reason for the absence of any candidate cell, maintaining an on-going service in step 2320. If signals received from terminals in a particular area are weak, the network determines that the signal from the network does not reach the area sufficiently. If the analysis reveals that the performance of the network is to be improved for such a reason as failed reception of a broadcasting service signal at the terminal although the terminal is located within the broadcasting network coverage, the network sends HO solution V-1 to the terminal in step 2322 and receives a Confirm message from the terminal in step 2323. If the Confirm message indicates that the terminal has succeeded in the handover in step 2324, the network ends the procedure. If the handover fails, the network performs step 2325.

Meanwhile, if the analysis reveals that the terminal has moved out of the service area of the broadcasting network in step 2321, the network determines whether to continue the on-going service over the interactive network in step 2325, If the network decides on the handover to the interactive network, the network ends the HO solution V-2 to the terminal in step 2326 and receives a Confirm message from the terminal in step 2327. If the Confirm message accepts the handover to the interactive network, the network processes the broadcasting-to-interactive handover in step 2329. Then the process is over. On the contrary, if the Confirm message rejects the handover to the interactive network in step 2328, the network ends the procedure without processing the broadcasting-to-interactive handover.

Meanwhile, if the network determines not to support the handover to the interactive network in step 2325, the network performs Process 3. Thus, the network sends HO solution IV message to the terminal in step 2330 and ends the process.

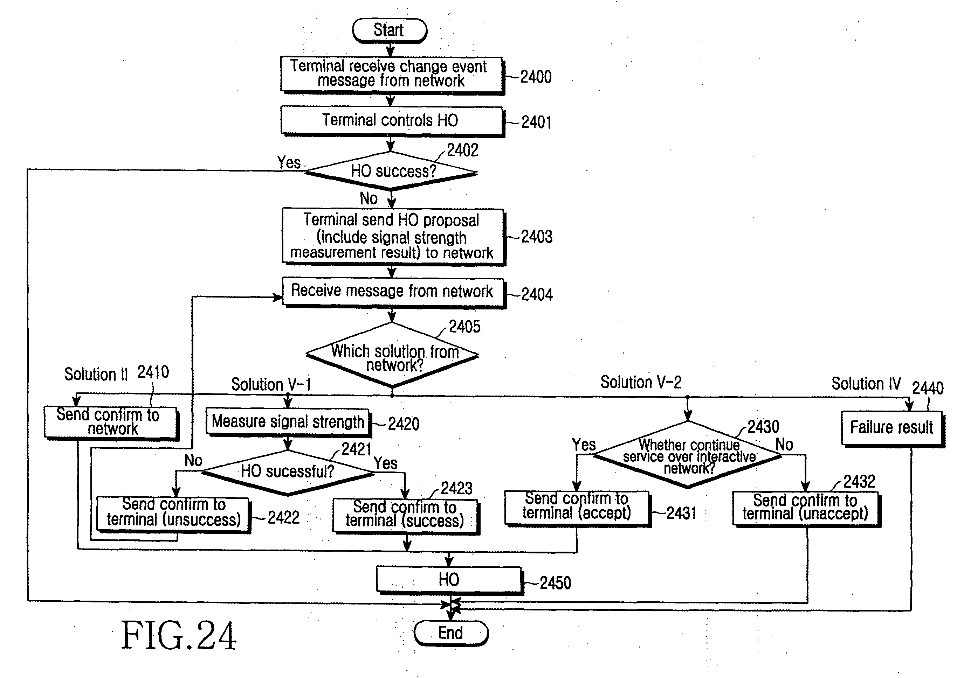

Referring to FIG. 24, the terminal receives a Change Event Message from the network in step 2400 and attempts a terminal-controlled handover in step 2401. If the terminal-controlled handover is successful in step 2402, the terminal ends the process. If the terminal-controlled handover is failed, the terminal sends an HO proposal message with received signal strength measurements to the network in step 2403 and receives a response message from the network in step 2404. In step 2405, the terminal determines which solution the response message includes.

In case of HO solution II, the terminal sends a Confirm message to the network in step 2410 and performs the handover in step 2450. Then the terminal ends the procedure.

In case of HO solution V-1, the terminal measures received signal strengths in step 2420 and determines whether the handover is successful based on the measurements in step 2421. If the handover is successful, the terminal sends a Confirm message indicating success to the network in step 2423 and performs the handover in step 2450. Then the terminal ends the procedure. If the handover is unsuccessful, the terminal sends a Confirm message indicating failure to the network in step 2422 and returns to step 2404.

In case of HO solution V-2, the terminal determines whether to perform the handover to the interactive network in step 2430. If the terminal decides on the handover to the interactive network, it sends a Confirm message accepting the handover to the interactive network in step 2431 and performs the handover in step 2450. Then the terminal ends the procedure. If the terminal determines not to perform the handover to the interactive network in step 2430, it sends a Confirm message to the network rejecting the handover to the interactive network in step 2432. Then the terminal ends the procedure.

In case of an HO solution IV, the terminal ends the procedure, considering that the handover has failed in step 2430.

As described above, the present invention offers the following benefits.

With the introduction of a network-controlled handover scheme to a DVB-H CBMS system, seamless service can be provided to a terminal even when the terminal moves to a new cell or a new network during reception of a selected service. Even though the terminal moves out of a broadcasting network area, it can receive the on-going service seamlessly over an interactive network.

When a change occurs to a network, the network notifies the terminal of the change and provides essential or additional information to the terminal. Simultaneously, the network may designate a target cell for the terminal or when needed, enables handover to the interactive network. Therefore, the terminal can perform the handover using a conventional handover scheme and the improved handover scheme without interrupting the on-going service despite the change of the network. This improved handover scheme enables seamless service provisioning to the terminal.

In a handover situation, the terminal first attempts a terminal-controlled handover. If the terminal-controlled handover is failed, the network-controlled handover is performed. When necessary, the handover is processed to the interactive network. Therefore, the terminal can perform the handover in the conventional scheme and the improved handover scheme. This improved handover scheme enables seamless service provisioning to the terminal.

While the invention has been shown and described with reference to certain exemplary embodiments, it will be understood by those skilled in the art that various changes in form and details may be made therein without departing from the spirit and scope of the present invention as further defined by the appended claims and their equivalents.

## Claims

1. A method of a network for supporting a handover for a terminal in a Digital Video Broadcasting-Handheld (DVB-H) Convergence of Broadcast and Mobile Services (CBMS) system, comprising:
receiving a handover proposal message from the terminal;
sending information about a candidate cell for the handover to the terminal; and
sending information for service reception to the terminal over an interactive network and processing the handover from a broadcasting network to the interactive network, if the terminal moves out of the broadcasting network.

2. The method of claim 1, wherein the candidate cell information transmission comprises:
sending a handover response message including information about a plurality of candidate cells to the terminal; and
receiving signal strength measurements of the candidate cells from the terminal, selecting the best candidate cell according to the signal strength measurements, and notifying the terminal of the selected candidate cell.

3. The method of claim 1, wherein the handover proposal message includes information about received signal strength measurements of neighboring cells, and the handover proposal message reception comprises receiving the handover proposal message when the terminal fails the handover.

4. The method of claim 3, further comprising sending handover information upon request of the terminal, before receiving the handover proposal message.

5. A method of a terminal for performing a handover in a Digital Video Broadcasting-Handheld (DVB-H) Convergence of Broadcast and Mobile Services (CBMS) system, comprising:
sending a handover proposal message to a network, if a strength of a signal received from a serving cell is decreased;
receiving a response message for the handover proposal message from the network;
performing the handover to a suitable candidate cell, if the response message includes information about the candidate cells; and
performing the handover to an interactive network, if the response message includes information indicating that a service requested by the terminal is provided over the interactive network.

6. The method of claim 5, wherein the step of performing of the handover to a suitable candidate cell further comprises:
measuring the received signal strengths of the candidate cells according to the response message and sending the signal strength measurements to the network; and
receiving information about the suitable candidate cell from the network and performing the handover to the suitable candidate cell.

7. The method of claim 5, wherein the handover proposal message includes the received signal strengths of neighboring cells.

8. The method of claim 5, wherein the step before sending the handover proposal message further comprising:
requesting handover information to the network and receiving the requested handover information; and
performing a handover based on the handover information;
wherein the handover proposal message transmission comprises sending the handover proposal message if the handover fails.

9. A method of a network for supporting a handover for a terminal in a Digital Video Broadcasting-Handheld (DVB-H) Convergence of Broadcast and Mobile Services (CBMS) system, comprising:
detecting a network environmental change and sending information about the change to the terminal;
receiving a handover proposal message including the received signal strength measurements of neighboring cells from the terminal;
making a handover solution based on the signal strength measurements and a network layout; and
notifying the terminal of the handover solution.

10. The method of claim 7, wherein the handover solution making comprises:
determining if there is a suitable candidate cell for the handover based on the signal strength measurements;
sending information about the suitable candidate cell to the terminal, if there is a suitable candidate cell;
requesting the terminal to re-measure the received signal strengths of the neighboring cells, if there is not any suitable candidate cell and if it is determined that the performance of the network is to be improved; and
sending information for service reception to the terminal over an interactive network and processing the handover from a broadcasting network to the interactive network, if there is not any suitable candidate cell and the terminal has moved out of the broadcasting network.

11. The method of claim 9, wherein the environment change is at least one of service discontinuation, service replacement, service movement, service IDentifier (ID) change, and service Internet Protocol (IP) address change.

12. The method of claim 9, wherein the information about the network environmental change includes information about a new service to be provided due to the environment change.

13. The method of claim 9, wherein the handover proposal message includes the received signal strength measurements of the neighbor cells of the terminal and the handover proposal message reception comprises receiving the handover proposal message when the terminal fails in a handover.

14. The method of claim 13, further comprising sending handover information to the terminal, upon request of the terminal, before receiving the handover proposal message.

15. A method of a terminal for performing a handover in a Digital Video Broadcasting-Handheld (DVB-H) Convergence of Broadcast and Mobile Services (CBMS) system, comprising:
receiving information about a network environmental change from a network;
sending to the network a handover proposal message including the received signal strengths of neighbor cells measured based on the network environmental change;
receiving a handover solution from the network; and
performing the handover according to the handover solution.

16. The method of claim 15, wherein the performing of the handover comprises:
performing the handover to a suitable candidate cell, if the handover solution includes information about the suitable candidate cell for the handover;
re-measuring the received signal strengths of the neighbor cells and performing the handover to a suitable candidate cell, if the handover solution includes a request for re-measuring the received signal strengths of the neighbor cells; and
processing the handover to an interactive network, if the handover solution includes information for service reception over the interactive network.

17. The method of claim 15, wherein the network environmental change is at least one of service discontinuation, service replacement, service movement, service IDentifier (ID) change, and service Internet Protocol (IP) address change.

18. The method of claim 15, wherein the network environmental change information includes information about a new service to be provided due to the change.

19. The method of claim 15, wherein the handover proposal message includes the received signal strengths of the neighboring cells of the terminal.

20. The method of claim 19, further comprising, between the network environmental change information reception and the handover proposal message transmission:
requesting handover information to the network and receiving the requested handover information from the network; and
attempting a handover based on the handover information,
wherein the handover proposal message transmission comprises sending the handover proposal message when the terminal fails in the handover.

21. An apparatus of a network for supporting a handover for a terminal in a Digital Video Broadcasting-Handheld (DVB-H) Convergence of Broadcast and Mobile Services (CBMS) system, comprising:
a service manager for receiving a handover proposal message from the terminal, sending information about a candidate cell for the handover to the terminal, and sending information for receiving a service to the terminal over an interactive network and processing the handover from a broadcasting network to the interactive network, if the terminal moves out of the broadcasting network.

22. The apparatus of claim 21, wherein the service manager sends a handover response message including information about a plurality of candidate cells to the terminal, receives signal strength measurements of the candidate cells from the terminal, selects the best candidate cell according to the signal strength measurements, and notifies the terminal of the selected candidate cell.

23. The apparatus of claim 21, wherein the handover proposal message includes information about received signal strength measurements of neighbor cells of the terminal, and the service manager receives the handover proposal message, when the terminal fails in a handover.

24. The apparatus of claim 23, wherein the service manager sends handover information upon request of the terminal, before receiving the handover proposal message.

25. An apparatus of a terminal for performing a handover in a Digital Video Broadcasting-Handheld (DVB-H) Convergence of Broadcast and Mobile Services (CBMS) system, adapted to perform operations comprising:
sending a handover proposal message to a network, if the strength of a signal received from a serving cell is decreased;
receiving a response message for the handover proposal message from the network;
performing the handover to a suitable candidate cell among candidate cells, if the response message includes information about the candidate cells; and
performing the handover to an interactive network, if the response message includes information indicating that a service requested by the terminal is provided over the interactive network.

26. The apparatus of claim 25, wherein the apparatus measures the received signal strengths of the candidate cells according to the response message, sends the signal strength measurements to the network, receives information about the suitable candidate cell from the network, and performs the handover to the suitable candidate cell.

27. The apparatus of claim 25, wherein the handover proposal message includes the received signal strengths of neighboring cells of the terminal.

28. The apparatus of claim 27, wherein the apparatus requests handover information to the network, receives the requested handover information, and performs a handover based on the handover information, before sending the handover proposal message, and the apparatus sends the handover proposal message if the handover has failed.

29. An apparatus of a network for supporting a handover for a terminal in a Digital Video Broadcasting-Handheld (DVB-H) Convergence of Broadcast and Mobile Services (CBMS) system, comprising:
a service manager for detecting an environment change and sending information about the environment change to the terminal, receiving a handover proposal message including the received signal strength measurements of neighbor cells from the terminal, making a handover solution based on the signal strength measurements and a network layout, and notifying the terminal of the handover solution.

30. The apparatus of claim 29, wherein the service manager determines if there is a suitable candidate cell for the handover based on the signal strength measurements, sends information about the suitable candidate cell to the terminal, if there is a suitable candidate cell, requests the terminal to re-measure the received signal strengths of the neighbor cells, if there is not any suitable candidate cell and if it is determined that the performance of the network is to be improved, and sends information for service reception to the terminal over an interactive network and processes the handover from a broadcasting network to the interactive network, if there is not any suitable candidate cell and the terminal has moved out of the broadcasting network.

31. The apparatus of claim 29, wherein the network environmental change is at least one of service discontinuation, service replacement, service movement, service IDentifier (ID) change, and service Internet Protocol (IP) address change.

32. The apparatus of claim 29, wherein the information about the network environmental change includes information about a new service to be provided due to the environment change.

33. The apparatus of claim 29, wherein the handover proposal message includes the received signal strength measurements of the neighboring cells of the terminal and the service manager receives the handover proposal message when the terminal fails in a handover.

34. The apparatus of claim 33, wherein the service manager sends handover information to the terminal, upon request of the terminal, before receiving the handover proposal message.

35. An apparatus of a terminal for performing a handover in a Digital Video Broadcasting-Handheld (DVB-H) Convergence of Broadcast and Mobile Services (CBMS) system, adapted to perform operations comprising:
receiving information about a network environment change from a network;
sending to the network a handover proposal message including the received signal strengths of neighbor cells measured based on the network environment change;
receiving a handover solution from the network; and
performing the handover according to the handover solution.

36. The apparatus of claim 35, wherein the apparatus performs the handover to a suitable candidate cell, if the handover solution includes information about the suitable candidate cell for the handover, re-measures the received signal strengths of the neighbor cells and performs the handover to a suitable candidate cell, if the handover solution includes a request for re-measuring the received signal strengths of the neighboring cells, and processes the handover to an interactive network, if the handover solution includes information for service reception over the interactive network.

37. The apparatus of claim 35, wherein the network environmental change is at least one of service discontinuation, service replacement, service movement, service IDentifier (ID) change, and service Internet Protocol (IP) address change.

38. The apparatus of claim 35, wherein the network environmental change information includes information about a new service to be provided due to the environment change.

39. The apparatus of claim 35, wherein the handover proposal message includes the received signal strengths of the neighboring cells of the terminal.

40. The apparatus of claim 39, wherein between the network environment change information reception and the handover proposal message transmission, the apparatus requests handover information to the network and receiving the requested handover information from the network and attempts a handover based on the handover information, and if the terminal fails in the handover, the apparatus sends the handover proposal message to the network.
